(19) Europäisches Patentamt
European Patent Office
Office européen des brevets

(11) **EP 3 826 767 B1**

(12) **FASCICULE DE BREVET EUROPEEN**

(45) Date de publication et mention
de la délivrance du brevet:
**18.06.2025 Bulletin 2025/25**

(21) Numéro de dépôt: **19740387.6**

(22) Date de dépôt: **18.07.2019**

(51) Classification Internationale des Brevets (IPC):
*B01J 27/19* (2006.01)   *B01J 35/61* (2024.01)
*B01J 35/63* (2024.01)   *B01J 21/04* (2006.01)
*B01J 23/28* (2006.01)   *B01J 35/64* (2024.01)
*B01J 23/883* (2006.01)   *B01J 23/882* (2006.01)
*B01J 35/69* (2024.01)   *C10G 65/12* (2006.01)

(52) Classification Coopérative des Brevets (CPC):
(C-Sets disponibles)
**B01J 27/19; B01J 21/04; B01J 23/882;**
**B01J 23/883; B01J 35/613; B01J 35/615;**
**B01J 35/635; B01J 35/638; B01J 35/647;**
**B01J 35/651; B01J 35/653; B01J 35/657;**
**B01J 35/69; C10G 65/12;** B01J 23/28;   (Cont.)

(86) Numéro de dépôt international:
**PCT/EP2019/069367**

(87) Numéro de publication internationale:
**WO 2020/020740 (30.01.2020 Gazette 2020/05)**

(54) **CATALYSEUR COMALAXE ISSU DE SOLUTIONS A BASE D'HETEROPOLYANIONS, SON PROCEDE DE PREPARATION ET SON UTILISATION EN HYDROCONVERSION DE CHARGES HYDROCARBONEES LOURDES**

CO-MISCHKATALYSATOR AUS LÖSUNGEN, DIE HETEROPOLYANIONEN ENTHALTEN, VERFAHREN ZUR HERSTELLUNG UND VERWENDUNG DAVON ZUR HYDROKONVERSION VON SCHWEREN KOHLENWASSERSTOFFEINSÄTZEN

CO-MIXED CATALYST PRODUCED FROM SOLUTIONS CONTAINING HETEROPOLYANIONS, METHOD FOR THE PRODUCTION THEREOF, AND USE OF SAME IN HYDROCONVERSION OF HEAVY HYDROCARBON FEEDSTOCK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2018 FR 1856810**

(43) Date de publication de la demande:
**02.06.2021 Bulletin 2021/22**

(73) Titulaire: **IFP Energies nouvelles**
**92852 Rueil-Malmaison Cedex (FR)**

(72) Inventeurs:
• **CORRE, Thibault**
**92852 RUEIL-MALMAISON CEDEX (FR)**
• **DIGNE, Mathieu**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
FR-A1- 3 022 156   FR-A1- 3 022 800
US-A- 4 717 706   US-B1- 7 232 515

(52) Classification Coopérative des Brevets (CPC):
(Cont.)B01J 2523/00

C-Sets
B01J 2523/00, B01J 2523/31, B01J 2523/41,
B01J 2523/68, B01J 2523/845;
B01J 2523/00, B01J 2523/31, B01J 2523/41,
B01J 2523/68, B01J 2523/847;
B01J 2523/00, B01J 2523/31, B01J 2523/51,
B01J 2523/68, B01J 2523/845;
B01J 2523/00, B01J 2523/31, B01J 2523/51,
B01J 2523/68, B01J 2523/847;
B01J 2523/00, B01J 2523/31, B01J 2523/68,
B01J 2523/845, B01J 2523/847;
B01J 2523/00, B01J 2523/31, B01J 2523/68,
B01J 2523/847;
B01J 2523/00, B01J 2523/41, B01J 2523/68,
B01J 2523/845;
B01J 2523/00, B01J 2523/41, B01J 2523/68,
B01J 2523/847;
B01J 2523/00, B01J 2523/51, B01J 2523/68,
B01J 2523/845;
B01J 2523/00, B01J 2523/51, B01J 2523/68,
B01J 2523/847;
B01J 2523/00, B01J 2523/68, B01J 2523/845,
B01J 2523/847

## Description

### Domaine technique de l'invention

La présente invention concerne un procédé de préparation de catalyseurs et leurs utilisations dans des procédés d'hydrotraitement et/ou d'hydroconversion de charges hydrocarbonées lourdes.

### Art antérieur

La purification et la conversion des charges hydrocarbonées lourdes prend une importance de plus en plus grande dans la pratique du raffinage avec la nécessité croissante de réduire la quantité de soufre dans les coupes pétrolières et de convertir des fractions lourdes (dont le point d'ébullition est supérieur à 370°C) en fractions plus légères valorisables en tant que carburant.

En effet, étant données les spécifications imposées par chaque pays pour les carburants commerciaux, il est nécessaire de valoriser au mieux les bruts importés de plus en plus riches en fractions lourdes et en hétéroatomes, et de plus en plus pauvres en hydrogène.

Plusieurs schémas de raffinage impliquant différents types de procédés existent pour le traitement de charges pétrolières lourdes. Zong et al. (Recent Patents on Chemical Engineering, 2009, 2, 22-36) résument les différents procédés connus dans ce domaine. Parmi ceux-ci, deux procédés principaux d'hydrotraitement et d'hydroconversion de résidus atmosphériques ou de résidus sous vide (RSV) existent commercialement :

- les procédés en lit fixe, par exemple le procédé connu sous le nom de HYVAHL-F™ décrit dans le brevet FR2681871,
- les procédés en lit bouillonnant, par exemple le procédé connu sous le nom de H-OIL™ décrit dans les brevets US4521295, US4457831 et US4354852.

Il est connu de l'Homme du métier que les procédés d'hydrotraitement et d'hydroconversion permettent, par la mise en contact d'une charge hydrocarbonée lourde avec un catalyseur supporté, c'est-à-dire un catalyseur constitué d'un support et d'une phase active dispersée sur ce support, de réduire sensiblement sa teneur en asphaltènes, métaux, soufre et autres impuretés, tout en augmentant le rapport hydrogène sur carbone (H/C) et tout en la transformant plus ou moins partiellement en coupes plus légères.

Les procédés d'hydrotraitement des résidus en lit fixe (couramment appelés "Resid Desulfurization unit" ou RDS) conduisent à des performances en raffinage élevées. En effet, ils permettent de produire une coupe de température d'ébullition supérieure à 370°C contenant moins de 0,5% poids de soufre et moins de 20 ppm de métaux (notamment nickel et vanadium) à partir de charges contenant jusqu'à 5% poids de soufre et jusqu'à 250 ppm de métaux. En revanche, l'hydroconversion du résidu en coupes plus légères que le résidu atmosphérique (gazole et essence notamment) est relativement faible, et typiquement de l'ordre de 10 à 20% en poids. Dans un tel procédé, la charge, préalablement mélangée à de l'hydrogène, circule à travers plusieurs réacteurs en lit fixe disposés en série et remplis par des catalyseurs. La pression totale est généralement comprise entre 10,0 et 20,0 MPa et les températures comprises entre 340 et 420°C.

Lorsque la teneur en métaux de la charge est plus importante (supérieure à 250 ppm) et/ou lorsque qu'une conversion importante est recherchée (transformation de la fraction lourde 370°C+ ou 540°C+ en une fraction plus légère 370°C- ou 540°C-), des procédés d'hydrotraitement et d'hydroconversion en lit bouillonnant sont préférés. Dans ce type de procédé (décrit notamment par M.S. Rana et al., Fuel 86, 2007, p.1216), les performances en purification sont moindres que celles des procédés RDS mais l'hydroconversion de la fraction résidu est plus élevée et de l'ordre de 45% à 90%. Les températures importantes mises en jeu, comprises entre 400°C et 450°C, contribuent à cette hydroconversion élevée. De plus, du fait des teneurs très élevées en métaux et asphaltènes de la charge et de la forte conversion recherchée, les effluents formés par ce type de procédé peuvent présenter des problèmes de stabilité avec notamment la formation de sédiments, ces derniers étant néanmoins plus facilement éliminés des réacteurs du fait de la mise en mouvement du catalyseur.

Classiquement, les procédés d'hydrotraitement ou d'hydroconversion sont constitués d'au moins deux étapes (ou sections, ou étages) telles que décrites par exemple dans les brevets FR2681871 ou US4457831, chaque étape étant réalisée dans un ou plusieurs réacteurs. La première étape vise généralement à convertir une partie de la charge et à éliminer une grande partie des métaux et asphaltènes en utilisant un ou plusieurs catalyseurs adaptés pouvant être dénommés catalyseur d'hydrodémétallation (HDM). La dénomination HDM regroupe principalement les opérations d'élimination du vanadium et du nickel contenus dans les espèces de type résines ou asphaltènes, et dans une moindre mesure du fer. La seconde étape consiste à faire passer le produit de la première étape sur un ou plusieurs catalyseurs plus actifs en terme d'hydrogénation de la charge, mais moins tolérants au métaux et asphaltènes, afin de finaliser le raffinage et la conversion de la charge.

Pour la première étape d'hydrodémétallation, le catalyseur doit être apte à traiter des charges riches en métaux et en asphaltènes, tout en ayant un haut pouvoir démétallisant associé à une haute capacité de rétention en métaux, une grande résistance au cokage et un haut pouvoir hydrogénant des radicaux issus du craquage de la charge, ces radicaux étant connus pour être des précurseurs de sédiments. Des catalyseurs présentant une distribution poreuse permettant aux réactifs, notamment les asphaltènes, de diffuser plus facilement au sein de la porosité et ainsi d'atteindre de bonnes performances en hydrodémétallation et en taux de conversion des asphaltènes, sont décrits par exemple dans le brevet US5221656. L'avantage d'une telle distribution poreuse est aussi mise en avant dans les brevets US5089463 et US7119045. La phase active initiale du catalyseur placé dans l'étape d'hydrodémétallation est généralement constituée de nickel et de molybdène avec des teneurs en équivalent $MoO_3$ de l'ordre de 2 à 10% en poids.

Pour la seconde étape, le catalyseur doit présenter un fort potentiel hydrogénolysant de manière à réaliser un raffinage profond des produits : désulfuration, poursuite de la démétallation, abaissement du Carbon Conradson et de la teneur en asphaltènes, minimisation de la formation de sédiments. Un tel catalyseur se caractérise par un faible volume macroporeux. De plus, le brevet US4818743 enseigne que la distribution poreuse peut être monopopulée entre 1 et 13 nm ou bipopulée avec une différence relative entre les deux populations qui peut varier de 1 à 20 nm comme dans le brevet US6589908. La phase active initiale du catalyseur placé dans la seconde étape peut être constituée de cobalt et de molybdène, comme cela est décrit dans le brevet US6332976 avec des teneurs en équivalent $MoO_3$ de l'ordre de 10 à 17% en poids.

Le procédé conventionnel de préparation d'un catalyseur d'hydrotraitement ou d'hydroconversion de résidus fait intervenir un enchaînement de nombreuses étapes unitaires (H. Toulhoat et P. Raybaud, Catalysis By Transition Metal Sulphides, page 137, IFP Energies Nouvelles Publications, Editions Technip et T. Ertl et al, J (1999) Preparation of Solids Catalysts, Wiley-VCH, Weinheim). La première étape consiste en la préparation du support qui est généralement l'alumine gamma obtenu par mise en forme et traitement thermique sous air d'un précurseur d'alumine hydraté de type boehmite ou pseudo-boehmite. La technique de mise en forme la plus utilisée est la technique de malaxage-extrusion. Cette technique comprend un malaxage durant lequel le précurseur se transforme en une pâte cohésive puis il subit une extrusion (extrusion piston par exemple) à travers une filière qui déterminera la forme et la taille des grains. Les grains humides passent ensuite par une étape de séchage afin d'évaporer une partie de l'eau qu'ils contiennent. Ceux-ci sont ensuite calcinés à une température en générale supérieure à 500°C ce qui permet de former la phase alumine gamma et de stabiliser la texture poreuse du support qui ne changera plus même sous les conditions opératoires du procédé. L'étape suivante est une étape d'imprégnation, généralement par imprégnation à sec, de l'alumine par une solution aqueuse contenant les précurseurs de la phase active (métaux de transition du groupe VI et de groupe VIII), suivie par une éventuelle étape de maturation sous atmosphère saturée en eau afin de finaliser la diffusion des précurseurs de métaux dans la porosité du support. Le support imprégné subit ensuite généralement une étape de séchage et une étape de calcination dans le but de décomposer les précurseurs de métaux en oxydes. La phase active est finalement formée lors d'une étape de sulfuration, transformant les oxydes en sulfures de métaux.

Même si ce procédé conventionnel conduit généralement à des catalyseurs d'hydrotraitement ou d'hydroconversion présentant des performances satisfaisantes, celui-ci présente néanmoins le désavantage d'être un procédé coûteux car il met en œuvre un enchaînement de multiples étapes unitaires.

Afin d'optimiser les coûts de fabrication des catalyseurs, il est connu de l'Homme du métier qu'il est possible de préparer des catalyseurs d'hydrotraitement ou d'hydroconversion par comalaxage du support avec les précurseurs de la phase active, économisant ainsi au moins l'étape d'imprégnation, comme par exemple dans le brevet US 2005/0109674 ou US 4717706, où le catalyseur est préparé par comalaxage d'un gâteau de boehmite dopé au phosphore, avec des précurseurs métalliques de la phase active.

Ainsi, le brevet US4097413 décrit un catalyseur ayant des teneurs comprises entre 22 et 28% d'oxyde de molybdène (sous forme de trioxyde de molybdène) et entre 6 et 10% d'oxyde de cobalt par rapport au poids total du catalyseur, et une surface spécifique comprise entre 220 et 280 $m^2/g$, préparé par comalaxage de boehmite avec les précurseurs de la phase active, le produit obtenu après comalaxage étant partiellement séché afin d'ajuster sa teneur en eau pour pouvoir obtenir une pâte extrudable. Une fois l'extrusion réalisée, le catalyseur est obtenu par calcination à une température comprise entre 482 et 677°C. Bien que ce procédé soit optimisé puisqu'il permet d'économiser l'étape d'imprégnation mais également une étape de calcination (celle mise en œuvre dans le procédé conventionnel pour faire la transition boehmite vers alumine avant imprégnation du support avec les métaux précurseurs de la phase active), le désavantage principal du procédé de préparation décrit dans le brevet US4097413 est qu'il met en œuvre un précurseur d'alumine non stabilisé (la boehmite) qui est très réactif avec les solutions souvent acides contenant les précurseurs de la phase active. Ceci a pour conséquence de dégrader la texture poreuse du support, ce qui se manifeste généralement par des pertes de volume poreux et la création de microporosité néfaste pour la bonne diffusion des produits lourds que l'on peut trouver dans un résidu atmosphérique ou un résidu sous vide. De plus, l'interaction chimique forte entre les sites aluminiques de la boehmite et les précurseurs des métaux présents en solution génère une phase active faiblement dispersée et peu disponible car elle se retrouve emprisonnée dans la structure même du support.

Pour contourner ce problème, l'art antérieur décrit de nombreux procédés de comalaxage alumine (soit un support stabilisé) avec les précurseurs de la phase active, tels que les brevets US2010/0243526, US2015/0111726, US2013/0105364 et US2013/0284640. Ces procédés sont certes plus intégrés que le procédé conventionnel car ils permettent d'économiser une étape d'imprégnation mais, avec deux étapes de calcination (calcination de la boehmite pour former l'alumine et calcination après mise en contact de l'alumine avec les métaux), ils restent moins intégrés que le procédé de comalaxage de boehmite qui ne propose pas la calcination intermédiaire boehmite vers alumine.

Le brevet FR3022156 décrit un catalyseur d'hydrodémétallation de résidu obtenu selon un procédé de comalaxage alumine. La première étape consiste à synthétiser un gel précurseur d'alumine (boehmite) obtenu à partir d'aluminate de sodium et de sulfate d'aluminium. Ce précurseur boehmite est ensuite séché à une température de 120°C puis calciné à une température de 750°C pour obtenir l'alumine. On effectue ensuite un mélange entre la poudre d'alumine et une solution aqueuse obtenue par dissolution des précurseurs de la phase active tels que le trioxyde de molybdène, l'hydroxyde de nickel et l'acide phosphorique. La pâte obtenue est ensuite mise en forme, séchée à 80°C et calcinée une deuxième fois à 400°C. Une dernière étape de sulfuration est indispensable avant l'utilisation du catalyseur. Le catalyseur ainsi obtenu présente des caractéristiques et des performances catalytiques proches de celles d'un catalyseur préparé par imprégnation à sec d'alumine, et des performances catalytiques supérieures à celles d'un catalyseur préparé par comalaxage de boehmite. Ce type de procédé conventionnel est multi-étapes et contient notamment deux étapes de calcination.

Le procédé conventionnel est donc un procédé coûteux car il fait intervenir un enchaînement de nombreuses étapes unitaires. Les procédés alternatifs, économisant au moins un étape comme l'imprégnation, ne sont pas toujours concluants car ils peuvent engendrer des pertes de volumes poreux, la création de microporosité néfaste pour la bonne diffusion des résidus, du fait par exemple de la mise en contact de précurseurs d'alumine avec les solutions acides contenant les précurseurs métalliques.

De manière surprenante, la demanderesse a mis au point un nouveau procédé de préparation d'un catalyseur comprenant le comalaxage d'une boehmite avec une phase active issue d'une solution aqueuse formée d'un sel d'hétéropolyanion de type Keggin et/ou Keggin lacunaire et/ou Keggin lacunaire substitué et/ou Anderson et/ou Strandberg, présentant dans sa structure du molybdène et du cobalt et/ou du nickel. Un avantage principal de cette méthode de préparation est de limiter à la fois les problèmes de dégradation de la texture poreuse du support (perte de volume poreux notamment) et de mauvaise dispersion de la phase active (perte d'activité hydro-déshydrogénante) généralement rencontrées avec les procédés de comalaxage, tout en étant plus intégrée du fait de la réduction du nombre d'étapes unitaires dans le schéma de fabrication du catalyseur, notamment par la suppression d'une étape d'imprégnation et la mise en œuvre d'une unique étape de calcination.

Il est important de souligner que le catalyseur obtenu selon le procédé de préparation selon l'invention se distingue structurellement d'un catalyseur obtenu par simple imprégnation d'un précurseur sur le support d'alumine dans lequel l'alumine forme le support, et la phase active est introduite dans les pores de ce support. Le procédé de préparation du catalyseur tel que décrit dans la présente invention permet d'obtenir un matériau dans lequel les métaux et le support sont intimement mélangés formant ainsi la structure même du catalyseur après la calcination finale avec une porosité et une teneur en phase active adaptées aux réactions souhaitées.

Par ailleurs, l'utilisation d'une solution aqueuse formée d'un sel d'hétéropolyanions de type Keggin et/ou Keggin lacunaire et/ou Keggin lacunaire substitué et/ou Anderson et/ou Strandberg, présentant dans sa structure du molybdène et du cobalt et/ou du nickel permet de favoriser l'interaction entre les métaux et d'augmenter l'activité catalytique par rapport à tout autre type de solution aqueuse dans laquelle les métaux seraient dans des structures différentes, en particulier dans des composés azotés tels que les (poly)molybdate d'ammonium ou les nitrate de nickel ou de cobalt. De plus, les sels d'hétéropolyanions présentent des rapports molaires (Co+Ni)/Mo élevés, induisant après sulfuration, des rapports Co/Mo et Ni/Mo optimums dans les feuillets de disulfure de molybdène ($MoS_2$) générés, assurant la promotion de l'activité du molybdène.

La demanderesse a aussi découvert que l'utilisation dudit catalyseur dans différentes configurations de procédés d'hydrotraitement et/ou d'hydroconversion de résidus, permet de maintenir le taux de conversion de la fraction lourde ($HDC_{370+}$, $HDC_{540+}$) en fractions plus légères ($HDC_{370-}$, $HDC_{540-}$), le taux de conversion des asphaltènes ($HDAsC_7$), le taux de conversion du «Carbon Conradson Residue» (HDCCR), le taux d'hydrodésulfuration (HDS), d'hydrodémétallation (HDM) et d'hydrodéazotation (HDN) à des niveaux aussi élevés que ceux d'un catalyseur préparé sans étape de comalaxage avec une étape d'imprégnation à sec d'alumine ou préparé par comalaxage d'alumine selon un procédé conventionnel multi-étapes.

Le catalyseur selon l'invention permet une amélioration en hydrodémétallation et en hydrodésasphaltage, tout en présentant une grande stabilité dans le temps, par rapport aux procédés mettant en œuvre un comalaxage de boehmite avec des solutions azotées.

## Objet de l'invention

Un objet de la présente invention concerne un procédé de préparation d'un catalyseur comprenant une phase active comprenant du molybdène et du nickel et/ou du cobalt, et une matrice oxyde composée majoritairement d'alumine

ledit catalyseur comprenant un volume poreux total d'au moins 0,6 mL/g, un volume macroporeux compris entre 10,0 et 40,0 % du volume poreux total, un volume mésoporeux d'au moins 0,5 mL/g et un diamètre mésoporeux moyen supérieur à 5,0 nm, comprenant les étapes suivantes :

a) Une étape de préparation d'une solution aqueuse de précurseurs d'aluminium comprenant un premier précurseur d'aluminium, choisi parmi le sulfate d'aluminium, le chlorure d'aluminium, le nitrate d'aluminium et leurs mélanges, et un premier précurseur basique d'aluminium, choisi parmi l'aluminate de sodium, l'aluminate de potassium, l'ammoniaque, l'hydroxyde de sodium, l'hydroxyde de potassium et leurs mélanges;

b) Une étape de mise en contact de la solution obtenue à l'issue de l'étape a) avec un deuxième précurseur basique, choisi parmi l'aluminate de sodium, l'aluminate de potassium, l'ammoniaque, l'hydroxyde de sodium, l'hydroxyde de potassium et leurs mélanges, et avec un deuxième précurseur acide choisi parmi le sulfate d'aluminium, le chlorure d'aluminium, le nitrate d'aluminium, l'acide sulfurique, l'acide chlorhydrique, l'acide nitrique et leurs mélanges, pour obtenir une suspension, avec au moins un des deuxièmes précurseurs basique ou acide comprenant de l'aluminium, le débit relatif des deuxièmes précurseurs acide et basique étant choisi de manière à obtenir un pH du milieu réactionnel compris entre 7,0 et 10,0 et le débit du ou des deuxièmes précurseurs acide et basique contenant de l'aluminium étant réglé de manière à obtenir une concentration en équivalent alumine dans la suspension comprise entre 10,0 et 80,0 g/l, à une température comprise entre 20,0 et 90,0°C et pendant une durée comprise entre 1 et 75 minutes;

c) Filtration et lavage de la suspension obtenue à l'étape b) pour obtenir un gâteau de boehmite

d) Préparation d'une solution aqueuse limpide à un pH compris entre 3,5 et 8,0, comprenant un sel d'hétéropolyanion de type Keggin et/ou Keggin lacunaire et/ou Keggin lacunaire substitué et/ou Anderson et/ou Strandberg et leurs mélanges, ledit sel présentant dans sa structure du molybdène et du cobalt et/ou du nickel;

e) Comalaxage du gâteau de boehmite obtenu à l'issue de l'étape c) avec la solution aqueuse limpide obtenue à l'issue de l'étape d) pour former une pâte;

f) Mise en forme de la pâte obtenue à l'issue de l'étape e) pour former des grains de précurseur de catalyseur ;

g) Séchage des grains obtenus à l'issue de l'étape f), à une température inférieure à 250,0°C pour obtenir des grains séchés de précurseur du catalyseur;

h) Calcination des grains séchés obtenus à l'issue de l'étape g), à une température comprise entre 250,0 et 1000,0°C.

Un autre objet de l'invention concerne un procédé d'hydrotraitement et/ou d'hydroconversion d'une charge hydrocarbonée lourde contenant au moins 50,0% en poids d'hydrocarbures ayant une température d'ébullition supérieure à 300°C par rapport au poids de la charge hydrocarbonée lourde et au moins 1,0% en poids d'hydrocarbures ayant une température d'ébullition supérieure à 540°C par rapport au poids de la charge hydrocarbonée lourde, en présence d'un catalyseur préparé selon ledit procédé.

## Définitions et Abréviations

Il est précisé que, dans toute cette description, les expressions « compris(e) entre ... et ... » « comprenant entre ... et ... » doivent s'entendre comme incluant les bornes citées.

On entend par solution aqueuse « limpide », une solution aqueuse dépourvue de particules solides en suspension ou de précipité.

On entend par « grains », le matériau mis en forme.

On entend par « perte au feu » ou PAF, la mesure de quantité de matière volatile contenue dans un échantillon solide ou pâteux : elle s'exprime en % de masse par rapport à la masse initiale de l'échantillon. Elle s'obtient par mise au four à moufle de l'échantillon pendant 3 h à 1000°C. La PAF est obtenue par différence entre la masse de l'échantillon avant et après traitement à 1000°C au four à moufle.

On entend par « volume macroporeux » ou $V_{macro}$ ou $V_{50nm}$, le volume des pores de diamètre supérieur à 50,0 nm.

On entend par « volume mésoporeux » ou $V_{méso}$, le volume des pores de diamètre supérieur à 2,0 nm et inférieur à 50,0 nm.

On entend par « volume microporeux » ou $V_{micro}$, le volume des pores de diamètre inférieur à 2,0 nm. On entend par « volume poreux total » ou VPT, « volume mésoporeux » ou $V_{méso}$, « volume macroporeux » ou $V_{macro}$, les volumes déterminés par la méthode de l'intrusion au mercure. Les volumes sont mesurés selon la norme ASTM D4284-83, par la technique de la pénétration du mercure dans laquelle on applique l'équation Washburn qui donne la relation entre la pression, le diamètre du plus petit pore dans lequel le mercure pénètre à ladite pression, l'angle de mouillage et la tension superficielle selon la formule :

# EP 3 826 767 B1

$$d = \frac{(4.t.\cos(\theta)).10}{P}$$

dans laquelle

"d" représente le diamètre du pore (nm)
t la tension superficielle (48,5 Pa),
$\theta$ l'angle de contact, ($\theta$ = 140 degrés) et
P la pression (MPa)

On entend par « volume microporeux » ou $V_{micro}$, le volume déterminé par porosimétrie à l'azote. L'analyse quantitative de la microporosité est effectuée à partir de la méthode « t » (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On entend par « surface BET », la surface spécifique déterminée par adsorption d'azote conformément à la norme ASTM D 3663-78 établie à partir de la méthode BRUNAUER - EMMET - TELLER décrite dans le périodique "The journal of the American Chemical Society", 60, 309 (1938).

## Description détaillée de l'invention

Dans le sens de la présente invention, les différents modes de réalisation présentés peuvent être utilisés seul ou en combinaison les uns avec les autres, sans limitation de combinaison.

## Procédé de préparation du catalyseur

La présente invention concerne un procédé de préparation de catalyseur comprenant les étapes de :

a) Préparation d'une solution aqueuse de précurseurs d'aluminium ;
b) Mise en contact d'un deuxième précurseur acide et d'un deuxième précurseur basique dans la solution obtenue à l'issue de l'étape a) afin d'obtenir une suspension;
c) Filtration et lavage de la suspension obtenue à l'issue de l'étape b) pour obtenir un gâteau de boehmite;
d) Préparation d'une solution aqueuse comprenant un sel d'hétéropolyanion de type Keggin et/ou Keggin lacunaire et/ou Keggin lacunaire substitué et/ou Anderson et/ou Strandberg, seul ou en mélange, ledit sel présentant dans sa structure du molybdène et du cobalt et/ou du nickel ;
e) Comalaxage du gâteau de boehmite obtenu à l'issue de l'étape c) avec la solution obtenue à l'issue de l'étape d) pour obtenir une pâte ;
f) Mise en forme de la pâte obtenue à l'issue de l'étape e) pour former des grains de précurseur de catalyseur ;
g) Séchage des grains obtenus à l'issue de l'étape f) ;
h) Calcination des grains séchés obtenus à l'issue de l'étape g).

Les étapes a) à h) sont détaillées ci-après.

a) Préparation d'une solution aqueuse de précurseurs d'aluminium

Le procédé selon l'invention comprend une étape a) de préparation d'une solution aqueuse de précurseurs d'aluminium comprenant un premier précurseur acide d'aluminium et un premier précurseur basique d'aluminium, dans de l'eau.

Le premier précurseur acide d'aluminium est utilisé seul ou en mélange et est choisi parmi le sulfate d'aluminium, le chlorure d'aluminium, le nitrate d'aluminium et leurs mélanges, de préférence le sulfate d'aluminium.

Le premier précurseur basique est utilisé seul ou en mélange et est choisi parmi l'aluminate de sodium, l'aluminate de potassium, l'ammoniaque, l'hydroxyde de sodium, l'hydroxyde de potassium et leurs mélanges, préférentiellement le premier précurseur basique est choisi parmi l'aluminate de sodium et l'aluminate de potassium. De préférence, le premier précurseur basique est l'aluminate de sodium.

- Selon un premier mode de réalisation, la préparation de ladite solution aqueuse comprend deux opérations :

i) la mise en solution du premier précurseur acide d'aluminium, dans de l'eau et ;

ii) la mise en contact de ladite solution avec le premier précurseur basique d'aluminium, afin d'ajuster le pH de ladite solution.

*Etape i) de mise en solution*

La mise en solution du premier précurseur acide d'aluminium, dans de l'eau est réalisée à une température comprise entre 20,0 et 60,0°C, de préférence entre 40,0 et 60,0 °C.

Le taux d'avancement de l'étape i) est compris entre 0,5 et 13%, le taux d'avancement étant défini comme la proportion d'alumine théoriquement formée en équivalent poids $Al_2O_3$ lors de l'étape i), par rapport à la quantité totale formée à l'issue de l'étape b).

Le taux d'avancement est compris de préférence entre 0,5 et 4,0 % en poids, de manière très préférée entre 1,0 et 3,0 % en poids.

Préférentiellement, l'étape i) est réalisée sous-agitation pendant une durée comprise entre 2 et 60 minutes et de préférence entre 5 et 30 minutes.

Le pH de la solution obtenue à l'issue de l'étape i), est compris entre 0,5 et 5,0 de préférence entre 1 et 4, de manière préférée entre 1,5 et 3,5.

*Etape ii) de mise en contact*

La mise en contact de ladite solution, issue de l'étape i) avec le premier précurseur basique d'aluminium, est réalisée à une température comprise une température comprise entre 60,0 et 90,0°C., de préférence en 60,0 et 80,0 °C.

L'étape ii) dure entre 5 et 30 minutes, de préférence entre 7 et 25 minutes, et de manière très préférée entre 8 et 20 minutes.

Le pH de la solution obtenue à l'issue de l'étape ii) est compris entre 7,0 et 10,0, de préférence entre 8,0 et 10,0, de manière préférée entre 8,5 et 10,0 et de manière très préférée entre 8,7 et 9,9. Avantageusement, l'étape ii) est réalisée sous-agitation.

- Selon un deuxième mode de réalisation, la préparation de ladite solution aqueuse comprend deux opérations :
- i') la mise en contact du premier précurseur acide d'aluminium et du premier précurseur basique d'aluminium dans de l'eau, et ;
- ii') le chauffage de la suspension obtenue à l'issue de l'étape i').

*Etape i') de mise en contact*

La mise en contact du premier précurseur acide d'aluminium et du premier précurseur basique d'aluminium dans de l'eau est réalisée à une température comprise entre 20,0 et 60,0°C, de préférence entre 30 et 50°C.

Le taux d'avancement de l'étape i') est compris entre 0,5 et 13%, le taux d'avancement étant défini comme la proportion d'alumine théoriquement formée en équivalent poids $Al_2O_3$ lors de l'étape i'), par rapport à la quantité totale formée à l'issue de l'étape b).

Le taux d'avancement est compris de préférence entre 1,0 et 8,0 % en poids, de manière très préférée entre 1,0 et 3,0 % en poids.

Préférentiellement, l'étape i') est réalisée sous-agitation pendant une durée comprise entre 2 et 60 minutes et de préférence entre 5 et 30 minutes.

Le pH de la solution obtenue à l'issue de l'étape i'), est compris entre 0,5 et 5,0 de préférence entre 1 et 4, de manière préférée entre 8,5 et 10,5, de préférence en 9,0 et 10,0.

Une suspension aqueuse est obtenue à l'issue de l'étape i').

*Etape ii') de chauffage*

L'étape ii') de chauffage de la suspension aqueuse obtenue à l'issue de l'étape i'), est réalisée de manière à atteindre à la fin de l'étape ii') une température comprise entre 60,0 et 90,0°C, de préférence entre 60,0 et 80,0 °C.

L'étape ii') dure entre 5 et 45 minutes, de préférence entre 15 et 45 minutes, et de manière très préférée entre 20 et 40 minutes.

Avantageusement, l'étape ii') est réalisée sous-agitation.

b) Mise en contact d'un deuxième précurseur acide et d'un deuxième précurseur basique

L'étape b) est la mise en contact de la solution obtenue à l'issue de l'étape a) avec un deuxième précurseur acide et un deuxième précurseur basique en milieu réactionnel aqueux, pour obtenir une suspension. L'étape b) correspond à une étape de co-précipitation.

Le deuxième précurseur basique est utilisé seul ou en mélange et est choisi parmi l'aluminate de sodium, l'aluminate de potassium, l'ammoniaque, l'hydroxyde de sodium, l'hydroxyde de potassium et leurs mélanges.

Le deuxième précurseur acide est utilisé seul ou en mélange et est choisi parmi le sulfate d'aluminium, le chlorure d'aluminium, le nitrate d'aluminium, l'acide sulfurique, l'acide chlorhydrique, l'acide nitrique et leurs mélanges.

Au moins un des deuxièmes précurseurs basique ou acide comprend de l'aluminium et lesdits deuxième précurseurs peuvent être identiques ou différents des précurseurs introduits à l'étape a).

Le débit relatif des deuxièmes précurseurs acide et basique est choisi de manière à obtenir un pH du milieu réactionnel compris entre 7,0 et 10,0. Le débit du ou des deuxièmes précurseurs acide et basique contenant de l'aluminium est réglé de manière à obtenir une concentration en équivalent alumine dans la suspension comprise entre 10,0 et 80,0 g/L, préférentiellement entre 20,0 et 50,0 g/L et plus préférentiellement entre 25,0 et 40,0 g/L.

L'étape b) est réalisée à une température comprise entre 20,0 et 90,0 °C, et de manière plus préférée entre 30,0 et 70,0°C et à un pH compris entre 7,0 et 10,0, de préférence entre 8,0 et 10,0, de manière préférée entre 8,5 et 10,0 et de manière très préférée entre 8,7 et 9,9.

L'étape b) dure entre 1 et 75 minutes, préférentiellement entre 30 et 60 minutes.

Selon un mode de réalisation, l'étape b) est réalisée sous-agitation.

A l'issue de l'étape b), une suspension est obtenue.

c) Filtration et lavage

L'étape c) du procédé de préparation du catalyseur comprend la filtration de la suspension obtenue à l'issue de l'étape b). La filtration est réalisée selon les méthodes connues de l'Homme du métier.

Après filtration, le solide humide obtenu est lavé avec une solution aqueuse, de préférence à l'eau, avec une quantité d'eau égale à la quantité de solide filtré.

Selon un mode de réalisation, l'étape c) comprend entre un et quatre lavages. Chaque lavage est suivi d'une étape de filtration.

Le solide humide ainsi filtré et lavé, forme un gâteau de boehmite.

Ledit gâteau est la matrice dans laquelle les précurseurs métalliques de la phase active seront mélangés, à l'étape e).

Optionnellement, l'étape c) comprend l'élimination partielle de l'eau contenue dans le gâteau de boehmite. L'élimination est réalisée à une température inférieure à 50,0°C, pour obtenir une pâte. Ladite étape d'élimination est mise en œuvre à une température comprise entre 15,0 et 50,0°C, de préférence entre 15,0 et 45,0°C et préférentiellement entre 15,0 et 30,0°C et pendant une durée comprise entre 5 minutes et 48 heures et de préférence entre 30 minutes et 40 heures.

L'élimination d'au moins une partie de l'eau est réalisée selon les méthodes connues de l'homme du métier comme par exemple en étuve fermée et ventilée, en sécheur tunnel ou à bandes, par filtration poussée sous vide ou sous pression, par centrifugation, par séchage Infra Rouge, par séchage micro-onde, ou dans un malaxeur chauffant.

L'élimination partielle de l'eau peut permettre de diminuer la perte au feu (PAF) du gâteau de boehmite ayant une valeur comprise entre 70,0 et 95,0 %, en poids jusqu'à une valeur comprise entre 55,0 et 70,0 % en poids, et de préférence jusqu'à une valeur comprise entre 58,0 et 68,0 % en poids.

d) Préparation d'une solution aqueuse limpide

Le procédé selon l'invention comprend une étape d) de préparation d'une solution aqueuse limpide comprenant un sel d'hétéropolyanion utilisé seul ou en mélange et choisi parmi les sels d'hétéropolyanion de type Keggin, Keggin lacunaire, Keggin lacunaire substitué, Anderson ou Strandberg et leurs mélanges, ledit sel présentant dans sa structure du molybdène, et du cobalt et/ou du nickel.

La ou les solution(s) aqueuse(s) comprenant un sel d'hétéropolyanion, présentant dans sa structure du molybdène, et du cobalt et/ou du nickel, précurseurs de la phase active.

Le sel d'hétéropolyanion est choisi dans la liste constituée par :

- Les hétéropolyanions de type Keggin, Keggin lacunaire, ou Keggin lacunaire substitué, selon la formule (I) :

$$C_p X_{x/2} A_g Mo_m W_n X'_z O_y H_h \qquad (I)$$

Où,

- C est le cation H$^+$ et/ou un cation ammonium quaternaire substitué ou non substitué (e.g. N(R$_1$R$_2$R$_3$R$_4$)$^+$ dans lequel R$_1$, R$_2$, R$_3$ et R$_4$ sont identiques ou différents, linéaires, ramifiées, cycliques ou cycliques et ramifiés, et correspondent à un atome d'hydrogène ou un groupement alkyle comprenant de 1 à 5 atomes de carbone),
- p est un nombre entier compris entre 0 et 6, préférablement p est un nombre entier compris entre 0 et 2, tel que 0 ou 1,
- X est le cation Ni$^{2+}$ ou le cation Co$^{2+}$,
- x est un nombre entier compris entre 0 et 11, préférablement x est un nombre entier compris entre 3 et 8,
- p+x est un nombre entier compris entre 3 et 11, préférablement p+x est un nombre entier compris entre 3 et 8,
- A est le phosphore ou le silicium ou le bore, préférablement A est le phosphore ou le silicium,
- g est 0 ou 1, préférablement g est 1,
- Mo est le molybdène,
- W est le tungstène,
- m est un nombre entier compris entre 1 et 12, préférablement m est un nombre entier compris entre 9 et 12,
- n est un nombre entier compris entre 0 et 11, préférablement n est un nombre entier compris entre 0 et 3,
- m+n = 9 ou 11 ou 12, préférablement m+n = 11 ou 12,
- X' est un élément du groupe VIII du tableau périodique, préférablement X' est le nickel ou le cobalt,
- z est 0 ou 1,
- x+z est un nombre entier supérieur ou égal à 1,
- O est l'oxygène,
- y est un nombre entier égal à 34 ou 39 ou 40, préférablement y est un nombre entier égal à 39 ou 40,
- H est l'hydrogène,
- h est un nombre entier compris entre 0 et 3, préférablement h est un nombre entier compris entre 0 et 2, et
- la structure A$_g$Mo$_m$W$_n$X'$_z$O$_y$H$_h$ est l'hétéropolyanion chargé négativement, sa charge étant égale à -(p+x) ;

- les hétéropolyanions de type Anderson, de formule (II) :

$$A_aMo_mW_nO_yH_hMx_{/2} \qquad (II)$$

Où,

- A est le nickel ou le cobalt,
- a est 1 ou 2,
- Mo est le molybdène,
- W est le tungstène,
- m est un nombre entier compris entre 1 et 10, préférablement m est un nombre entier compris entre 6 et 10,
- n est un nombre entier compris entre 0 et 9, préférablement n est un nombre entier compris entre 0 et 4,
- m+n est 6 ou 10,
- O est l'oxygène,
- y est 24 ou 38,
- H est l'hydrogène,
- h est 4 ou 6,
- la structure A$_a$Mo$_m$W$_n$O$_y$H$_h$ est l'hétéropolyanion chargé négativement, sa charge étant égale à -x,
- M est un cation d'un des éléments du groupe VIII du tableau périodique, préférablement M est le cation Ni$^{2+}$ ou le cation Co$^{2+}$ et
- x est un nombre entier compris entre 3 et 8, préférablement x est un nombre entier compris entre 4 et 8 ;

- les hétéropolyanions de type Strandberg, de formule (III):

$$M_{(6-h)/2}H_hP_2Mo_mW_nO_{23} \qquad (III)$$

Où,

- M est le cation Ni$^{2+}$ ou le cation Co$^{2+}$,
- H est l'hydrogène,
- h est un nombre entier compris entre 0 et 2,
- P est le phosphore,

- Mo est le molybdène,
- W est le tungstène,
- m est un nombre entier compris entre 1 et 5, préférablement m est un nombre entier compris entre 3 et 5,
- n est un nombre entier compris entre 0 et 4, préférablement n est un nombre entier compris entre 0 et 2,
- m + n = 5,
- O est l'oxygène,
- la structure $H_hP_2Mo_mW_nO_{23}$ est l'hétéropolyanion chargé négativement, sa charge étant égale à h-6.

De préférence, le sel d'hétéropolyanion est choisi parmi les hétéropolyanions de type Anderson, de formule (II).

Selon un ou plusieurs modes de réalisation préférés, la préparation d'un sel d'hétéropolyanion comprend les étapes α, β, γ, et δ décrites ci-dessous :

α/ Dissolution d'un précurseur de molybdène, et optionnellement d'un précurseur de tungstène, avec un composé oxoacide et/ou un oxydant et/ou une base, dans l'eau ;
β/ Ajout d'un précurseur de nickel et/ou de cobalt à la solution obtenue à l'issue de l'étape α/ ;
γ/ Optionnellement élimination, de préférence par filtration, du solide formé à l'issue de l'étape β/ afin d'obtenir une solution aqueuse limpide comprenant un sel d'hétéropolyanion ;
δ/ Optionnellement le pH de la solution aqueuse est ajusté, par ajout d'une base organique, à une valeur comprise entre 3,5 et 8,0.

• *Etape α*

Selon un ou plusieurs modes de réalisation, ladite étape α de dissolution dure entre 2 minutes et 24 heures, à température ambiante ou à reflux, c'est-à-dire à une température comprise entre 10,0 et 100,0°C, de préférence entre 50,0 et 90,0°C, jusqu'à l'obtention d'une solution aqueuse.

Le précurseur de molybdène utilisé à l'étape α/ est choisi parmi les oxydes de molybdène tels que le trioxyde de molybdène, les hydroxydes de molybdène, les acides molybdiques, les acides phosphomolybdiques, les acides silicomolybdiques, les acides boromolybdiques, seul ou en mélange.

Optionnellement, le précurseur de tungstène utilisé à l'étape α/ est choisi parmi les oxydes de tungstène, les hydroxydes de tungstène, les acides tungstiques, les acides phosphotungstiques, les acides silicotungstiques, les acides borotungstiques, seul ou en mélange.

Optionnellement, le composé oxoacide utilisé à l'étape α/ est choisi parmi les acides siliciques (e.g. acide orthosilicique, métasilicique, pyrosilicique), les acides phosphoriques (e.g. acide orthophosphorique) et les acides boriques, seul ou en mélange.

Optionnellement, l'oxydant utilisé à l'étape α/ est choisi parmi le peroxyde d'hydrogène $H_2O_2$ et les alkyl-hydroperoxydes (R-OOH), en particulier le tertiobutyl-hydroperoxyde (tBu-OOH).

Optionnellement, la base utilisée à l'étape α/, présente un pKa supérieur ou égal à 12, de préférence supérieur ou égal à 14.

Préférentiellement, la base est choisi parmi l'hydroxyde de baryum $Ba(OH)_2$, l'hydroxyde de lithium LiOH, l'hydroxyde de sodium NaOH, l'hydroxyde de potassium KOH. De préférence, la base est l'hydroxyde de baryum $Ba(OH)_2$.

Selon un ou plusieurs modes de réalisation, le rapport molaire oxoaxide/(Mo+W) est compris entre 0,01 et 10,0, préférablement compris entre 0,05 et 1,5, de manière particulièrement préférée entre 0,09 et 1,0.

Selon un ou plusieurs modes de réalisation, le rapport molaire W/Mo est compris entre 0 et 25,0, préférentiellement compris entre 0 et 11,0, et de préférence compris entre 0 et 1,0.

Selon un ou plusieurs modes de réalisation, le rapport oxydant/(Mo+W) est compris entre 0,1 et 20,0, préférablement compris entre 0,5 et 10,0, de manière particulièrement préférée entre 2,0 et 7,0.

Selon un ou plusieurs modes de réalisation, le rapport molaire (base)/Mo est compris entre 0,01 et 10,0, préférablement compris entre 0,05 et 2,0, tel que compris entre 0,1 et 1,0.

• *Etape 6*

Selon un ou plusieurs modes de réalisation, l'étape β/ dure entre 2 minutes à 24 heures, à température ambiante ou à reflux, c'est-à-dire à une température comprise entre 10,0 et 100,0°C, de préférence à une température comprise entre 20,0 et 90,0°C, jusqu'à l'obtention d'une solution aqueuse.

Selon un mode de réalisation, la solution aqueuse comprend un précipité.

Selon un ou plusieurs modes de réalisation, le précurseur de nickel et/ou de cobalt, est choisi, seul ou en mélange, parmi les oxydes, les hydroxydes, les hydroxycarbonates, les carbonates, les sulfates de métal du groupe VIII, par exemple, l'hydroxycarbonate de nickel, le carbonate de cobalt, l'hydroxyde de nickel ou l'hydroxyde de cobalt.

Le rapport molaire (métaux du groupe VIII)/(Mo+W) est compris entre 0,05 et 5,0, préférablement compris entre 0,1 et 1,5, de manière particulièrement préférée entre 0,2 et 0,7. De préférence, ce rapport molaire est ajusté selon le type de charge et le procédé utilisé.

Selon un ou plusieurs modes de réalisation, les étapes α/ et β/ sont réalisées successivement ou simultanément.

De préférence, les étapes α/ et β/ sont réunies dans une seule et unique étape. Le précurseur de molybdène, optionnellement le précurseur de tungstène et/ou le composé oxoacide et/ou l'oxydant et/ou la base, et le précurseur de nickel et/ou de cobalt, sont dissouts simultanément dans l'eau, durant 2 minutes à 24 heures, à température ambiante ou à reflux, c'est-à-dire à une température comprise entre 10,0 et 100,0°C, de préférence à une température comprise entre 20,0 et 90,0°C, jusqu'à l'obtention d'une solution aqueuse.

Selon un mode de réalisation, la solution aqueuse comprend un précipité.

• *Etape γ*

Selon un ou plusieurs modes de réalisation, ladite étape γ/ de filtration est mise en œuvre lorsque l'ajout du précurseur de nickel et/ou de cobalt lors de l'étape β/, entraine la formation d'un précipité.

A l'issue de l'étape γ/, une solution aqueuse limpide est obtenue comprenant un sel d'hétéropolyanion, seul ou en mélange.

Tout procédé connu de l'homme du métier, tel que la filtration ou la centrifugation, est mis en œuvre pour réaliser la séparation permettant l'élimination du précipité.

• *Etape δ*

Selon un ou plusieurs modes de réalisation, ladite étape δ/ dure entre 2 minutes et 24 heures et est réalisée à une température comprise entre 5,0 et 50,0°C, de préférence à une température comprise entre 10,0°C et 30,0°C.

La base organique est choisie parmi l'ammoniaque, les amines tertiaires, l'urée ou le méthénamine, seule ou en mélange et de préférence la base organique est l'ammoniaque.

La base organique est ajoutée à la solution issue de l'étape β/ ou γ/, dans des proportions permettant d'ajuster le pH de la solution à une valeur comprise entre 3,5 et 8,0, de manière préférée entre de 3,5 et 7,5, de manière particulièrement préférée entre 3,5 et 7,0.

Avantageusement, l'étape δ/ est réalisée lorsque le pH de la solution issue de l'étape β/ ou γ/, est inférieur à 3,5.

Selon un ou plusieurs modes de réalisation préférés, la solution aqueuse comprenant un sel d'hétéropolyanion, seul ou en mélange, est préparée :

- (j) par dissolution dans l'eau d'au moins un sel d'HPA;
- (jj) par préparation directe du sel d'hétéropolyanion dans une solution aqueuse, comprenant la réalisation des étapes α/, β/ et optionnellement γ/ et/ou δ/.

De préférence, la solution de sel d'hétéropolyanion est préparée par préparation directe du sel d'hétéropolyanion dans une solution aqueuse selon la seconde mise en œuvre jj).

Le sel d'hétéropolyanion peut être avantageusement préparé par toutes les méthodes bien connues de l'homme de l'art ou bien peuvent être acquis auprès de sociétés spécialisées dans la fabrication et la vente de sel d'hétéropolyanion.

Selon un ou plusieurs modes de réalisation, le sel d'hétéropolyanion, utilisé seul ou en mélange, à l'étape d) du procédé de préparation du catalyseur, est choisi parmi les hétéropolyanions suivants : $Ni_{3/2}PMo_{12}O_{40}$, $Ni_2SiMo_{12}O_{49}$, $Ni_3Mo_{12}O_{40}H_2$, $Ni_4SiMo_{11}O_{39}$, $Ni_{7/2}PMo_{11}O_{39}$, $Ni_3SiMo_{11}NiO_{40}H_2$, $Ni_3PMo_{11}NiO_{40}H$, $Co_{3/2}PMo_{12}O_{40}$, $Co_2SiMO_{12}O_{40}$, $Co_3Mo_{12}O_{40}H_2$, $Co_4SiMO_{11}O_{39}$, $Co_{7/2}PMo_{11}O_{39}$, $Co_3SiMo_{11}CoO_{40}H_2$, $Co_3SiMo_{11}NiO_{40}H_2$, $Ni_3SiMo_{11}CoO_{40}H_2$, $Co_3PMo_{11}CoO_{40}H$, $Co_3PMo_{11}NiO_{40}H$, $Ni_3PMo_{11}CoO_{40}H$ respectant la formule (I), $Co_2Mo_6O_{24}H_6Co_{3/2}$, $CoMo_6O_{24}H_6Ni_{3/2}$, $CoMo_6O_{24}H_6Co_2$, $CoMo_6O_{24}H_6Ni_2$, $NiMo_6O_{24}H_6Ni_2$, $NiMo_6O_{24}H_6Co_2$, $Co_2Mo_{10}O_{38}H_4Co_3$, $Co_2Mo_{19}O_{33}H_4Ni_3$, $Ni_2Mo_{10}O_{38}H_4Co_4$, $Ni_2Mo_{10}O_{38}H_4Ni_4$ respectant la formule (II), $Co_2H_2P_2Mo_5O_{23}$, $Co_{5/2}HP_2Mo_5O_{23}$, $Co_3P_2Mo_5O_{23}$, $Ni_2H_2P_2Mo_5O_{23}$, $Ni_{5/2}HP_2Mo_5O_{23}$, $Ni_3P_2Mo_5O_{23}$ respectant la formule (III).

De manière préférée, selon un ou plusieurs modes de réalisation, le sel d'hétéropolyanion est choisi parmi les sels suivants : $Ni_4SiMo_{11}O_{39}$, $Ni_3SiMo_{11}NiO_{40}H_2$, $Co_4SiMo_{11}O_{39}$, $Co_3SiMo_{11}CoO_{40}H_2$, $Co_3SiMo_{11}NiO_{40}H_2$, $Ni_3SiMo_{11}CoO_{40}H_2$, respectant la formule (I), $CoMo_6O_{24}H_6Co_2$, $NiMo_6O_{24}H_6Ni_2$, $Co_2Mo_{10}O_{38}H_4Co_3$, $Ni_2Mo_{10}O_{38}H_4Ni_4$ respectant la formule (II), $Co_{5/2}HP_2Mo_5O_{23}$, $Co_3P_2Mo_5O_{23}$, $Ni_{5/2}HP_2Mo_5O_{23}$, $Ni_3P_2Mo_5O_{23}$ respectant la formule (III).

De manière très préférée, selon un ou plusieurs modes de réalisation, le sel d'hétéropolyanion selon la présente description est choisi parmi les sels suivants : $Ni_4SiMO_{11}O_{39}$, $Ni_3SiMo_{11}NiO_{40}H_2$, respectant la formule (I), $NiMo_6O_{24}H_6Ni_2$, $Ni_2Mo_{10}O_{38}H_4Ni_4$ respectant la formule (II), $Ni_{5/2}HP_2Mo_5O_{23}$, $Ni_3P_2Mo_5O_{23}$ respectant la formule (III).

La ou les formules brutes données ci-dessus font référence à la composition globale de la solution mais ne préjuge pas de la forme exacte du ou des structures moléculaires présentes dans la solution finale.

Préférentiellement, la solution aqueuse obtenue à l'issue de l'étape d), ne comprend pas de composés azotés, tels que des sels d'ammonium ou des sels de nitrates. En effet, les ions nitrates ont un effet négatif sur la dispersion des métaux et l'activité du catalyseur final obtenu à l'issue du procédé de préparation selon la présente invention.

Optionnellement, la solution aqueuse obtenue à l'issue de l'étape d) peut subir une étape de dilution ou une étape d'évaporation, dans le but de modifier la teneur en eau de ladite solution en fonction de la teneur ciblée en métaux du catalyseur final. La dilution ou l'évaporation sont réalisées par tout moyen connu de l'Homme du métier.

La solution obtenue à l'issue de l'étape d), a un pH compris entre 3,5 et 8,0, de manière préférée entre de 3,5 et 7,5, de manière particulièrement préférée entre 3,5 et 7,0, permettant d'obtenir un catalyseur dans lequel les métaux et le support sont intimement mélangés avec une porosité et une teneur en phase active adaptées aux réactions souhaitées.

Conformément à l'invention, si la solution aqueuse obtenue à l'issue de l'étape d) contient uniquement un ou des sel(s) d'hétéropolyanion respectant la formule (II), le pH de ladite solution est comprise entre 3,5 et 8,0, de manière préférée entre de 3,5 et 5,8, de manière particulièrement préférée entre 3,5 et 5,5.

Conformément à l'invention, si la solution aqueuse obtenue à l'issue de l'étape d) contient uniquement un ou des sel(s) d'hétéropolyanion respectant la formule (I) et/ou la formule (III), le pH de ladite solution est comprise entre 3,5 et 8,0, de manière préférée entre de 3,8 et 7,5, de manière particulièrement préférée entre 4,0 et 7,0.

Selon un ou plusieurs modes de réalisation, la solution aqueuse obtenue à l'issue de l'étape d) présente une concentration molaire en molybdène comprise entre 0,5 et 5,0 mol/L, de manière préférée entre de 0,8 et 4,5, de manière particulièrement préférée entre 1,0 et 4,0 mol/L.

e) <u>Comalaxage du gâteau avec la solution aqueuse</u>

Le procédé selon l'invention comprend une étape e) de comalaxage du gâteau de boehmite obtenu à l'issue de l'étape c) et la solution aqueuse limpide obtenue à l'issue de l'étape d), pour former une pâte. Le comalaxage est réalisé selon les moyens connus de l'Homme du métier, comme par exemple dans un malaxeur.

Optionnellement, de l'eau permutée et/ou un additif minéral ou organique sont ajoutés au mélange du gâteau et de la solution aqueuse, dans le but de faciliter le malaxage, l'extrusion et d'améliorer les propriétés mécaniques du matériau. L'additif minéral ou organique est choisi parmi les polyéthylène glycols, les acides mono-carboxyliques, l'alcool polyvinylique, la méthylcellulose, les dérivés de cellulose, les dérivés de type cellulose hydroxyéthylée, les argiles, les oxydes de titane, de fer, ou d'aluminium, et leurs mélanges.

La durée du comalaxage est inférieure à 20 minutes, de préférence inférieure à 10 minutes, et de manière préférée, inférieure à 5 minutes. La vitesse de malaxage est comprise en 20 et 50 tr/min.

La PAF de la pâte à ce stade est comprise entre 55,0% et 75,0%, et de manière préférentielle entre 60,0% et 70,0%.

f) <u>Mise en forme de la pâte</u>

Le procédé selon l'invention comprend une étape f) de mise en forme de la pâte obtenue à l'issue de l'étape e), pour former des grains de précurseur de catalyseur. La mise en forme est réalisée selon toute technique connue de l'Homme du métier, par exemple par extrusion, par pastillage, par la méthode de la goutte d'huile, ou par granulation au plateau tournant. De préférence, la mise en forme est réalisée par extrusion.

Le diamètre des grains obtenues après la mise en forme ont un diamètre compris entre 0,3 et 10,0 mm, de préférence entre 0,5 et 3,2 mm et plus préférentiellement entre 0,7 et 2,5 mm.

Dans un mode de réalisation préféré, les grains obtenus après mises en forme sont des grains cylindriques, trilobés ou quadrilobés de diamètre compris entre 0,7 et 2,5 mm.

Selon un mode de réalisation préférée, l'étape e) de comalaxage et l'étape f) de mise en forme sont réunies en une seule étape de comalaxage-mise en forme, de préférence par comalaxage-extrusion.

g) <u>Séchage de la pâte</u>

Le procédé selon l'invention comprend une étape g) de séchage des grains obtenus à l'issue de l'étape f), pour obtenir des grains séchés de précurseur du catalyseur. Le séchage est réalisé à une température inférieure à 250,0°C, de préférence comprise entre 50,0 et 250,0°C, de manière préférée comprise entre 70,0 et 180,0°C et encore plus préférentiellement comprise entre 100,0 et 130,0°C, selon toute technique connue de l'Homme du métier, avantageusement pendant une durée comprise entre 1 et 24 heures.

De préférence, le séchage est réalisé en étuve fermée et ventilée.

h) Calcination

Le procédé selon l'invention comprend une étape h) de calcination des grains séchés obtenus à l'issue de l'étape g). La calcination est réalisée à une température comprise entre 250,0 et 1000,0°C, de préférence entre 300,0 et 800,0°C et de manière encore plus préférée entre 350,0 et 550,0°C, avantageusement pendant une durée comprise entre 1 et 10 heures, en présence d'un flux d'air sec ou d'un flux d'air contenant jusqu'à 90% en volume d'eau.

Selon un mode de réalisation, le flux d'air contenant jusqu'à 90% en volume d'eau, est ajouté à pression atmosphérique (steaming) ou en pression autogène (autoclavage). En cas de steaming, la teneur en eau est de préférence comprise entre 150,0 et 900,0 grammes par kilogramme d'air sec, et de manière encore plus préférée, entre 250,0 et 650,0 grammes par kilogramme d'air sec.

Selon un mode de réalisation, l'étape de séchage g) et l'étape de calcination h), peuvent être réalisées en une seule et unique étape de traitement thermique et, selon un mode de réalisation particulier, plusieurs cycles combinés de traitements thermiques peuvent être réalisés.

Le catalyseur obtenu à l'issue de l'étape h) comprend une phase active comprenant du molybdène, du cobalt et/ou du nickel, ainsi qu'une matrice oxyde composée majoritairement d'alumine

Avantageusement, le catalyseur obtenu à l'issue de l'étape h) subit une étape de sulfuration avant son utilisation. Cette étape consiste à activer le catalyseur en transformant, au moins en partie, la phase oxyde en milieu sulfo-réducteur. Ce traitement d'activation par sulfuration est bien connu de l'Homme du métier et peut être effectué *in situ* ou *ex situ* par toute méthode déjà décrite dans la littérature.

Une méthode de sulfuration classique bien connue de l'Homme du métier consiste à chauffer le catalyseur sous flux d'un mélange d'hydrogène et d'hydrogène sulfuré ou sous flux d'un mélange d'hydrogène et d'hydrocarbures contenant des molécules soufrées à une température comprise entre 150,0 et 800,0°C, de préférence entre 250,0 et 600,0°C.

Le traitement de sulfuration peut être effectué *ex situ* (avant l'introduction du catalyseur dans le réacteur d'hydrotraitement/hydroconversion) ou *in situ* au moyen d'un agent organosoufré précurseur d'$H_2S$ injecté avec la charge hydrocarbonée lourde à traiter. L'$H_2S$ peut également provenir par exemple de l'$H_2S$ contenu dans l'hydrogène recyclé vers le réacteur d'hydrotraitement et/ou d'hydroconversion ou de la décomposition thermique de molécules organo-soufrées présentes ou préalablement introduites (injection de diméthyldisulfure, toute charge hydrocarbonée soufrée du type mercaptans, sulfures, essence soufrée, gasoil soufré, distillat sous vide soufré, résidu soufré) dans la charge.

Le catalyseur

Le catalyseur préparé selon ledit procédé comprend une phase active comprenant du molybdène et du nickel et/ou du cobalt, et une matrice oxyde composée majoritairement d'alumine, avec un volume poreux total d'au moins 0,6 mL/g, un volume macroporeux compris entre 10,0 et 40,0 % du volume poreux total, un volume mésoporeux d'au moins 0,5 mL/g et un diamètre mésoporeux moyen supérieur à 5,0 nm.

Le catalyseur du procédé selon l'invention, présente un volume poreux total (VPT) d'au moins 0,6 mL/g et de préférence d'au moins 0,7 mL/g. Dans un mode de réalisation préféré, le catalyseur présente un volume poreux total compris entre 0,7 et 1,1 mL/g.

Le catalyseur du procédé selon l'invention, présente un volume macroporeux, compris entre 10,0 et 40,0% du volume poreux total, de préférence entre 15,0 et 35,0% du volume poreux total et encore plus préférentiellement entre 20,0 et 30,0 % du volume poreux total.

Le volume mésoporeux (Vméso) du catalyseur, le volume mésoporeux est d'au moins 0,50 mL/g, de préférence d'au moins 0,55 mL/g et préférentiellement compris entre 0,55 mL/g et 0,80 mL/g.

Le diamètre à Vméso/2 (diamètre mésoporeux moyen), est supérieur à 5,0 nm, avantageusement compris entre 5,0 nm et 30,0 nm, de préférence compris entre 7,0 et 25,0 nm et préférentiellement compris entre 7,0 et 20,0 nm.

Le catalyseur présente de manière avantageuse un diamètre moyen macroporeux (ou diamètre à Vmacro/2) compris entre 250,0 et 1500,0 nm, de préférence compris entre 500,0 et 1000,0 nm, de manière encore plus préférée comprise entre 600,0 et 800,0 nm.

Le catalyseur présente avantageusement, une surface spécifique BET d'au moins 100,0 m$^2$/g, de préférence d'au moins 120,0 m$^2$/g et de manière encore plus préférée comprise entre 150,0 et 250,0 m$^2$/g.

Le catalyseur présente de manière avantageuse un volume microporeux inférieur à 0,05 mL/g, préférentiellement inférieur à 0,03 mL/g, plus préférentiellement inférieur à 0,02 mL/g, et encore plus préférentiellement le volume microporeux est inférieure à 0,01 mL/g. De préférence, le catalyseur ne présente pas de micropores.

Le catalyseur obtenu à l'issue de l'étape h) a une teneur en molybdène avantageusement comprise entre 2,0 et 18,0% en poids de trioxyde de molybdène par rapport à la masse totale du catalyseur, de préférence entre 3,0 et 14,0%, et de manière encore plus préférée entre 4,0 et 10,0% poids.

Selon un mode de réalisation, le catalyseur obtenu à l'issue de l'étape h), a une teneur en tungstène avantageusement comprise entre 2,0 et 18,0% en poids de trioxyde de tungstène par rapport à la masse totale du catalyseur, de préférence entre 3,0 et 14,0%, et de manière encore plus préférée entre 4,0 et 10,0% poids.

La teneur en métal cobalt et/ou nickel est avantageusement comprise entre 0,25 et 5,0% en poids de l'oxyde de cobalt et/ de nickel, par rapport à la masse totale du catalyseur, de préférence entre 0,4 et 4,0% et de manière encore plus préférée entre 0,7 et 3,0% poids.

La teneur en élément silicium (ou phosphore ou bore) est avantageusement comprise entre 0,1 à 8,0% en poids d'oxyde de silicium ou d'oxyde de phosphore ou d'oxyde de bore, par rapport à la masse totale du catalyseur, de préférence entre 0,4 et 6,0% en poids et de manière encore plus préférée entre 0,6 et 4,0 % en poids.

**Utilisation du catalyseur obtenu selon le procédé de préparation**

Le catalyseur selon l'invention peut être mis en œuvre, avec un ou plusieurs autres catalyseurs connus de l'Homme du métier, dans des procédés d'hydrotraitement, en lit fixe par exemple, ou des procédés d'hydroconversion, en lit bouillonnant par exemple, permettant de convertir des charges hydrocarbonées lourdes, comprenant des impuretés soufrées et des impuretés, particulièrement des métaux. Son introduction permet de maintenir voire d'augmenter l'hydrotraitement et/ou l'hydroconversion de la charge lourde par rapport à l'utilisation de tout autre catalyseur connu de l'Homme du métier préparé selon un procédé conventionnel.

Les charges hydrocarbonées lourdes

Les charges hydrocarbonées lourdes sont des charges hydrocarbonées qui contiennent au moins 50,0% en poids, de préférence au moins 65,0% en poids, de manière particulièrement préférée au moins 80,0% en poids d'hydrocarbures ayant une température d'ébullition supérieure à 300°C par rapport au poids de la charge hydrocarbonée lourde et au moins 1,0% en poids d'hydrocarbures ayant une température d'ébullition supérieure à 540°C par rapport au poids de la charge hydrocarbonée lourde.

Les charges hydrocarbonées lourdes contiennent du soufre à une teneur supérieure à 0,1% en poids, des métaux à une teneur supérieure à 20,0 ppm en poids et des asphaltènes C7 à une teneur supérieure à 1,0% en poids, telles que des charges pétrolières lourdes (appelées résidus) et/ou des fractions d'hydrocarbures produites dans une raffinerie. Les charges pétrolières lourdes incluent des résidus atmosphériques, des résidus sous vide (e.g. résidus atmosphérique ou sous vide issus d'étapes d'hydrotraitement, d'hydrocraquage et/ou d'hydroconversion), des distillats sous vide frais ou raffinés, des coupes provenant d'une unité de craquage (e.g. unité de craquage catalytique en lit fluidisé (FCC pour « Fluid Catalytic Cracking » selon la terminologie anglo-saxonne), de cokage ou de viscoréduction, des coupes aromatiques extraites d'une unité de production de lubrifiants, des huiles désasphaltées issues d'une unité de désasphaltage, des asphaltes issus d'une unité de désasphaltage, ou une combinaison de ces charges. La charge hydrocarbonée lourde peut contenir en outre une fraction résiduelle issue de la liquéfaction directe de charbon (un résidu atmosphérique et/ou un résidu sous vide issu par exemple du procédé H-Coal™), un distillat sous vide issue de la liquéfaction directe de charbon, comme par exemple le procédé H-Coal™, ou encore une fraction résiduelle issue de la liquéfaction directe de la biomasse lignocellulosique seule ou en mélange avec du charbon et/ou une fraction pétrolière fraîche et/ou raffinée.

Selon un ou plusieurs modes de réalisation, les charges pétrolières lourdes sont constituées de fractions d'hydrocarbures issues d'un pétrole brut ou de la distillation atmosphérique d'un pétrole brut ou de la distillation sous vide d'un pétrole brut, lesdites charges contenant une fraction d'au moins 50,0% en poids, de préférence au moins 65,0% en poids, de manière particulièrement préférée au moins 80,0% en poids, par rapport au poids de la charge ayant une température d'ébullition d'au moins 300,0°C, de préférence d'au moins 350,0°C et de manière préférée d'au moins 375,0°C et de manière préférée des résidus sous vide ayant une température d'ébullition d'au moins 450,0°C, de préférence d'au moins 500,0°C et de manière préférée d'au moins 540,0°C.

Les charges hydrocarbonées lourdes traitées par le procédé selon la présente description peuvent contenir des impuretés, comme des métaux, du soufre, des résines, de l'azote, du « Conradson Carbon residue » selon la terminologie anglo-saxonne et des insolubles à l'heptane, également appelée asphaltènes C7. Selon un ou plusieurs modes de réalisation, la charge hydrocarbonée lourde comprend une teneur en métaux supérieure à 50,0 ppm en poids, et/ou une teneur en soufre supérieure à 0,1% en poids, et/ou une teneur en asphaltènes C7 supérieure à 1,0% en poids, et/ou une teneur en carbone Conradson supérieure à 3,0% en poids (e.g. supérieure à 5,0% en poids), par rapport au poids total de la charge hydrocarbonée lourde. Les asphaltènes C7 sont des composés connus pour inhiber la conversion de coupes résiduelles, à la fois par leur aptitude à former des résidus hydrocarbonés lourds, communément appelés coke, et par leur tendance à produire des sédiments qui limitent fortement l'opérabilité des unités d'hydrotraitement et d'hydroconversion. La teneur en carbone Conradson est définie par la norme ASTM D 482 et représente pour l'homme du métier une évaluation bien connue de la quantité de résidus de carbone produit après une pyrolyse sous des conditions standards de température et de pression.

Procédé d'hydrotraitement

Conformément à l'invention, le catalyseur à phase active comalaxée est avantageusement utilisé dans les premiers lits catalytiques d'un procédé comprenant successivement au moins une étape d'hydrodémétallation et au moins une étape d'hydrodésulfuration. Le procédé selon l'invention est avantageusement mis en œuvre dans un à dix réacteurs successifs, le ou les catalyseur(s) selon l'invention pouvant avantageusement être chargé(s) dans un ou plusieurs réacteurs et/ou dans tout ou partie des réacteurs.

Dans un mode de réalisation préféré, des réacteurs permutables, c'est à dire des réacteurs fonctionnant en alternance, dans lequel des catalyseurs d'hydrodémétallation selon l'invention peuvent de préférence être mis en œuvre, peuvent être utilisés en amont de l'unité. Dans ce mode de réalisation préféré, les réacteurs permutables sont suivis ensuite par des réacteurs en série, dans lequel sont mis en œuvre des catalyseurs d'hydrodésulfuration qui peuvent être préparés selon toute méthode connue de l'Homme du métier.

Dans un mode de réalisation très préféré, deux réacteurs permutables sont utilisés en amont de l'unité, avantageusement pour l'hydrodémétallation et contenant un ou plusieurs catalyseurs selon l'invention. Ils sont suivis avantageusement par un à quatre réacteurs en série, avantageusement utilisés pour l'hydrodésulfuration.

Le procédé selon l'invention peut avantageusement être mis en œuvre en lit fixe avec pour objectif l'élimination des métaux et du soufre et d'abaisser le point d'ébullition moyen des hydrocarbures. Dans le cas où le procédé selon l'invention est mis en œuvre en lit fixe, la température de mise en œuvre est avantageusement comprise entre 320,0°C et 450,0°C, de préférence 350,0°C à 410,0°C, sous une pression partielle en hydrogène avantageusement comprise entre 3,0 MPa et 30,0 MPa, de préférence entre 10,0 et 20,0 MPa, à une vitesse spatiale horaire de la charge par rapport au volume de chaque catalyseur est comprise entre 0,06 h$^{-1}$ et 17,00 h$^{-1}$, de préférence entre 0,12 h$^{-1}$ et 3,00 h$^{-1}$ et de manière préférée entre 0,12 h$^{-1}$ et 1,60 h$^{-1}$. Selon un ou plusieurs modes de réalisation, la quantité d'hydrogène mélangée à la charge hydrocarbonée lourde est de préférence comprise entre 50,0 et 5000,0 normaux mètres cube (Nm$^3$) par mètre cube (m$^3$) de charge hydrocarbonée lourde liquide, tel qu'entre 100,0 et 3000,0 Nm$^3$/m$^3$ et de manière préférée entre 200,0 et 2000,0 Nm$^3$/m$^3$.

Procédé d'hydroconversion

Selon un ou plusieurs modes de réalisation, l'étape d'hydroconversion est effectuée au moyen d'un ou plusieurs réacteurs triphasiques, qui peuvent être en série et/ou en parallèle. Par exemple, chaque réacteur d'hydroconversion peut être un réacteur de type lit fixe, lit mobile ou lit bouillonnant en fonction de la charge hydrocarbonée lourde à traiter. Dans l'étape hydroconversion, ladite charge hydrocarbonée lourde est généralement transformée dans des conditions classiques d'hydroconversion d'une fraction hydrocarbonée liquide.

Selon un ou plusieurs modes de réalisation, l'étape hydroconversion est opérée sous une pression absolue comprise entre 2,0 et 38,0 MPa, de préférence entre 5,0 et 25,0 MPa et de manière préférée, entre 6,0 et 20,0 MPa, et/ou à une température comprise entre 300,0 et 500,0°C et de préférence comprise entre 350,0 et 450,0°C.

Selon un ou plusieurs modes de réalisation, la vitesse spatiale horaire (VVHr) de la charge par rapport au volume de chaque réacteur est comprise entre 0,05 h$^{-1}$ et 10,0 h$^{-1}$, de préférence entre 0,10 h$^{-1}$ et 2,0 h$^{-1}$ et de manière préférée entre 0,10 h$^{-1}$ et 1,0 h$^{-1}$.

Selon un ou plusieurs modes de réalisation, la vitesse spatiale horaire (VVHc) de la charge par rapport au volume de chaque catalyseur est comprise entre 0,06 h$^{-1}$ et 17,0 h$^{-1}$, de préférence entre 0,12 h$^{-1}$ et 3,0 h$^{-1}$ et de manière préférée entre 0,12 h$^{-1}$ et 1,60 h$^{-1}$.

Selon un ou plusieurs modes de réalisation, la quantité d'hydrogène mélangée à la charge hydrocarbonée lourde est de préférence comprise entre 50,0 et 5000,0 normaux mètres cube (Nm$^3$) par mètre cube (m$^3$) de charge hydro-carbonée lourde liquide, tel qu'entre 100,0 et 3000,0 Nm$^3$/m$^3$ et de manière préférée entre 200,0 et 2000,0 Nm$^3$/m$^3$.

Selon un ou plusieurs modes de réalisation, l'hydroconversion est mise en œuvre dans un ou plusieurs réacteurs triphasiques d'hydroconversion, qui peuvent être en série et/ou en parallèle, utilisant la technologie des réacteurs à lit bouillonnant.

Selon un ou plusieurs modes de réalisation, l'étape d'hydroconversion est mise en œuvre à l'aide de la technologie et dans les conditions du procédé H-Oil™ tel que décrit par exemple dans les brevets US 4,521,295 ou US 4,495,060. Dans cette mise en œuvre, chaque réacteur est opéré en lit triphasique fluidisé, également appelé lit bouillonnant. Selon un ou plusieurs modes de réalisation, chaque réacteur comporte une pompe de recirculation permettant le maintien du catalyseur solide supporté en lit bouillonnant par recyclage continu d'au moins une partie d'une fraction liquide soutirée en tête du réacteur et réinjectée en bas du réacteur.

Selon un ou plusieurs modes de réalisation, chaque réacteur de l'étape d'hydroconversion utilise un catalyseur différent adapté à la charge hydrocarbonée lourde qui est envoyée dans chaque réacteur. Selon un ou plusieurs modes de réalisation, plusieurs types de catalyseurs peuvent être utilisés dans chaque réacteur. Selon un ou plusieurs modes de réalisation, chaque réacteur peut contenir un ou plusieurs catalyseurs solides supportés.

Le catalyseur solide supporté d'hydroconversion usagé peut, conformément au procédé selon la présente description, être au moins en partie remplacé par du catalyseur solide supporté frais par soutirage, de préférence en bas du réacteur, et par introduction, soit en haut soit en bas du réacteur, de catalyseur solide supporté frais et/ou usagé et/ou régénéré et/ou réjuvéné, par exemple à intervalle de temps régulier et de manière préférée par saccade ou de façon quasi continue. Le remplacement de catalyseur solide supporté peut être fait tout ou en partie par du catalyseur solide supporté usagé et/ou régénéré et/ou réjuvéné issu du même réacteur et/ou d'un autre réacteur de n'importe quelle étape d'hydroconversion. Le catalyseur solide supporté peut être ajouté avec les métaux sous forme d'oxydes de métaux, avec les métaux sous forme de sulfures de métaux, ou après un préconditionnement. Selon un ou plusieurs modes de réalisation, pour chaque réacteur, le taux de remplacement du catalyseur solide supporté d'hydroconversion usé par du catalyseur solide supporté frais est compris entre 0,01 kilogramme et 10,0 kilogrammes par mètre cube de charge hydrocarbonée lourde traitée, et de préférence entre 0,1 kilogramme et 3,0 kilogrammes par mètre cube de charge hydrocarbonée lourde traitée. Selon un ou plusieurs modes de réalisation, le soutirage et le remplacement sont effectués à l'aide de dispositifs permettant le fonctionnement continu de l'étape d'hydroconversion.

Selon un ou plusieurs modes de réalisation, le catalyseur solide supporté usé soutiré du réacteur est envoyé dans une zone de régénération dans laquelle on élimine le carbone et le soufre qu'il renferme puis de renvoyer le catalyseur solide supporté régénéré dans l'étape d'hydroconversion. Selon un ou plusieurs modes de réalisation, le catalyseur solide supporté usé soutiré du réacteur est envoyé dans une zone de réjuvénation dans laquelle on élimine la majeure partie des métaux déposés, avant d'envoyer le catalyseur solide supporté usé et réjuvéné dans une zone de régénération dans laquelle on élimine le carbone et le soufre qu'il renferme puis de renvoyer le catalyseur solide supporté régénéré dans l'étape d'hydroconversion.

Les exemples suivant illustrent l'invention sans toutefois en limiter la portée.

## Exemples

Exemple 1 : Préparation d'une solution aqueuse contentant le sel d'hétéropolyanion de Keggin $Ni_4SiMo_{11}O_{39}$ (conforme à l'invention)

$\alpha$/ Dissolution de 22,3 g d'acide silicomolybdique $H_4SiMo_{12}O_{40},13H_2O$ (0,011 mol) dans de l'eau, à 20°C (coloration jaune, translucide) et ajout et de 8,2 g de $Ba(OH)_2,H_2O$ (0,043 mol), sous agitation pendant 30 minutes (aucun changement de coloration) ;

$\beta$/ Ajout de 11,4 g de $NiSO_4.6H_2O$ (0,043 mol) au mélange obtenu à l'issue de l'étape $\alpha$ et agitation pendant 2 heures (le mélange devient opaque, verdâtre)

$\gamma$/ Filtration sur fritté pour séparer le précipité de $BaSO_4$ (solide blanc) de la solution de $Ni_4SiMO_{11}O_{39}$.;

de l'eau est ajoutée à la solution de manière à ajuster la concentration en $MoO_3$ à 15,2% poids dans la solution.

Le ratio Ni/Mo atomique de la solution est de 0,36 ; son pH est égal à 5.

La solution de l'exemple 1 comprend majoritairement le sel d'hétéropolyanion de Keggin $Ni_4SiMo_{11}O_{39}$.

Exemple 2 : Préparation d'une solution aqueuse contentant les sels d'hétéropolyanions d'Anderson $NiMo_6O_{24}H_6Ni_2$ et $Ni_2Mo_{10}O_{38}H_4Ni_4$ (conforme à l'invention)

$\alpha$/ Dissolution de 21,6 g de trioxyde de molybdène (le rapport molaire $H_2O_2$/Mo étant de 6), dans 102 g d'eau oxygénée (pureté 30% dans 70% d'eau), pendant 16 heures à 20°C (solution jaune orangée obtenue) ;

$\beta$/ Ajout pendant 20 minutes (contrôle exothermie et dégagement de $CO_2$ observé) de 10,6 g d'hydroxycarbonate de nickel, toujours à 20°C (rapport atomique Ni/Mo de 0,60) ;

de l'eau est ajoutée à la solution de manière à ajuster la concentration en $MoO_3$ à 16,8% poids dans la solution.

Au final, la solution contient majoritairement les sels des HPA d'Anderson $NiMo_6O_{24}H_6Ni_2$ et $Ni_2Mo_{19}O_{33}H_4Ni_4$. Le pH de la solution finale est de 3,6.

Exemple 3 : Préparation d'une solution aqueuse d'heptamolybdate d'ammonium et de nitrate de nickel (non conforme à l'invention)

- Dissolution simultanée dans l'eau de 29,7 g d'heptamolybdate d'ammonium $(NH_4)_6Mo_7O_{24},4H_2O$, 17,8 g de nitrate de nickel $Ni(NO_3)_2,6H_2O$ en présence de 9,5 g d'eau oxygénée (pureté 30% dans 70% d'eau), à 20°C pendant 15 minutes ;
- Ajout d'eau à la solution, après solubilisation complète des précurseurs, de manière à ajuster la concentration en $MoO_3$ à 18,8% poids dans la solution. Le ratio Ni/Mo atomique de la solution est de 0,36 ; son pH est égal à 5.

La préparation de l'exemple 3 correspond à une simple solubilisation du molybdate d'ammonium ; il n'y a pas formation d'hétéropolyanion.

Exemple 4 : Préparation d'une solution aqueuse à pH inférieur à 3,5 (non conforme à l'invention)

- Dissolution de 33,1 g d'oxyde de molybdène, 9,8 g d'hydroxycarbonate de nickel et de 12,7 g d'acide orthophosphorique dans de l'eau, à 90°C pendant 3 heures ;
- Ajout d'eau à la solution, après solubilisation complète des précurseurs de manière à ajuster la concentration en $MoO_3$ à 22,5% poids dans la solution.

Le ratio Ni/Mo atomique de cette solution est de 0,36. Le pH de la solution est de 1,2.

L'exemple 4 comprend majoritairement le sel de nickel de l'hétéropolyanion de Strandberg $Ni_2H_2P_2Mo_5O_{23}$ .

Exemple 5 : Préparation d'une solution aqueuse à pH supérieur à 3,5 contenant le sel $Ni_{5/2}HP_2Mo_5O_{23}$ après addition d'ammoniaque (conforme à l'invention)

- Dissolution simultanée de 54,0 g d'oxyde de molybdène, 16,0 g d'hydroxycarbonate de nickel et de 20,7 g d'acide orthophosphorique dans de l'eau à 90°C pendant 3 heures de manière à ce que la concentration en $MoO_3$ soit de 30,5% poids dans la solution ;
- Ajout de 2,03 g d'une solution d'ammoniaque à 20% dans l'eau à 29,6g de la solution précédente, après solubilisation complète des précurseurs (l'ajout d'ammoniaque peut induire temporairement la formation d'un précipité qui disparait rapidement sous agitation) ;
- Ajout d'eau à la solution de manière à ajuster la concentration en $MoO_3$ à 22,5% poids dans la solution.

Le ratio Ni/Mo atomique de cette solution est de 0,36. Le pH de la solution est de 4,1. La solution de l'exemple 5 comprend majoritairement le sel de nickel de l'hétéropolyanions de Strandberg $Ni_{5/2}HP_2Mo_3O_{23}$ .

Exemple 6 : Préparation d'un gâteau de boehmite (conforme à l'invention)

a) Ajout de sulfate d'aluminium dans un pied d'eau, en une seule fois dans un réacteur batch chauffé et maintenu à 65°C. L'évolution du pH, qui reste compris entre 2,5 et 3, est suivie pendant 10 minutes. Lors de cette étape, environ 8 g équivalent $Al_2O_3$ par rapport à la masse totale d'alumine formée à l'issue de la synthèse du solide ont été introduits dans un volume de 1290 mL. Puis on réalise un ajout progressif d'aluminate de sodium avec pour objectif d'atteindre un pH compris entre 7 et 10 en une durée de 5 à 15 min ;
b) Ajout simultané de sulfate d'aluminium et d'aluminate de sodium afin que le pH reste compris entre 7 et 10. A la fin de l'ajout simultané des deux réactifs, 144 g équivalent $Al_2O_3$ ont été versés pour un volume total de 3530 mL ;
c) Filtration de la suspension ainsi obtenue réalisée par déplacement sur un bâti de filtration de type entonnoir Buchner sous vide avec un fritté de type P4, suivie de trois lavages successifs avec 5 L d'eau distillée.

La teneur en eau (ou « perte au feu ») du gâteau de boehmite ainsi obtenu est de 71%.

Exemple 7 : Préparation d'un catalyseur C1 par imprégnation à sec d'alumine (non conforme à l'invention)

- Filtration et lavage du gâteau de boehmite obtenu selon l'exemple 6, puis séchage à 120°C pendant 16 heures en étuve ventilée et obtention d'un solide séché avec une PAF de 26% ;

- Mélange du solide à une solution aqueuse contenant de l'acide nitrique à 52,7% (1,0%, exprimé en poids d'acide par rapport à la masse équivalente d'alumine introduite) et malaxage pendant 20 minutes dans un malaxeur à bras en Z ;
- Mise en contact du mélange avec une solution aqueuse contenant de l'ammoniaque à 20,3% (40 % mol d'ammoniaque par mole d'acide) pendant 5 minutes dans le même malaxeur ;
- Mise en forme de la pâte obtenue, dans une extrudeuse piston avec une filière ayant des orifices trilobés de diamètre circonscrit égal à 1,5 mm ;
- Séchage des grains durant une nuit à 120°C ;
- Calcination à 540°C pendant 2,0 h, sous un débit d'air contenant 60 g d'eau / kg d'air sec.

Les grains d'alumine trilobés ainsi obtenus ont un diamètre de 1,2 mm, une surface spécifique de 180 $m^2$/g, un volume poreux total de 0,80 mL/g, une distribution de mésopores centrée sur 11 nm (diamètre poreux à Vméso/2). Cette alumine contient en outre 0,20 mL/g de volume poreux dans les pores de diamètre supérieur à 50 nm (volume macroporeux), c'est à dire un volume macroporeux égal à 25 % du volume poreux total.

- Dilution de la solution aqueuse préparée selon l'exemple 4, dans de l'eau déminéralisée de manière à ce que la teneur en oxyde de molybdène après calcination soit de 9% poids par rapport au poids total de catalyseur sec ;
- Imprégnation à sec de l'alumine ainsi obtenue, par ladite solution aqueuse ;
- Maturation du catalyseur pendant 16 heures en atmosphère humide ;
- Séchage à 120°C pendant 24 heures ;
- Calcination sous air à 450°C pendant 2 heures.

Ainsi, nous obtenons le catalyseur C1 préparé par imprégnation à sec à partir de la solution aqueuse décrite dans l'exemple 4, sur l'alumine dont le protocole de préparation est décrit avec cet exemple 7.

Exemple 8 : Préparation d'un catalyseur C2 par comalaxage de boehmite et d'une solution aqueuse contenant le sel $Ni_4SiMo_{11}O_{39}$ (conforme à l'invention)

c) Obtention d'un gâteau de boehmite tel que décrit dans l'exemple 6, puis séchage sous vide poussé et progressivement augmenté, à une température de 20°C, pendant une durée de 6 heures, et obtention d'un gâteau avec une PAF passant de 71% à 62% poids ;
d) Préparation d'une solution aqueuse tel que décrite à l'exemple 1 ;
e) Mise en contact de 90,0g de gâteau obtenu à l'issue de l'étape c) avec 22,7g de la solution obtenue à l'issue de l'étape d) (masses ajustées de manière à obtenir 9% de $MoO_3$ sur le catalyseur final) pendant 2 minutes, et comalaxage pendant 2 minutes dans un malaxeur à bras en Z pour obtenir une pâte. La PAF de la pâte est à ce stade de 66% poids;
f) Mise en forme de la pâte obtenue, dans une extrudeuse piston, à travers une filière ayant des orifices trilobés de diamètre circonscrit égal à 1,5 mm pour former des grains ;
g) Séchage des grains pendant une nuit à 120°C puis calcinés à 540°C pendant deux heures sous un débit d'air contenant 60 g d'eau / kg d'air sec ;

On obtient ainsi des grains trilobés de 1,2 mm de diamètre, ayant une surface spécifique de 180 $m^2$/g, un volume poreux total de 0,78 mL/g, une distribution de mésopores centrée sur 11 nm (dp à Vméso/2). Cette alumine contient en outre 0,20 mL/g de volume poreux dans les pores de diamètre supérieur à 50 nm (volume macroporeux).
Ainsi, nous obtenons le catalyseur C2 préparé par comalaxage de la solution aqueuse n°1, dont la préparation est décrite avec l'exemple 1, avec le gâteau de boehmite issu de l'exemple 6.

Exemple 9 : Préparation d'un catalyseur C3 par comalaxage de boehmite et d'une solution aqueuse contenant les sels $NiMo_6O_{24}H_6Ni_2$ et $Ni_2Mo_{10}O_{38}H_4Ni_4$ (conforme à l'invention)

c) Obtention d'un gâteau de boehmite tel que décrit dans l'exemple 6, puis séchage du gâteau sous vide poussé et progressivement augmenté, à une température de 20°C, pendant 6 heures, et obtention d'un gâteau avec PAF passant de 71% à 62% poids.
d) Préparation d'une solution aqueuse tel que décrite à l'exemple 2 ;

e) Mise en contact de 90,0g de gâteau obtenu à l'issue de l'étape c) avec 20,7g de la solution obtenue à l'issue de l'étape d) (masses ajustées de manière à obtenir 9% de MoO$_3$ sur le catalyseur final) pendant 2 minutes, et comalaxage pendant 2 minutes dans un malaxeur à bras en Z pour obtenir une pâte. La PAF de la pâte est à ce stade de 65% poids;

f) Mise en forme de la pâte obtenue dans une extrudeuse piston, à travers une filière ayant des orifices trilobés de diamètre circonscrit égal à 1,5 mm pour former des grains ;

g) Séchage des grains pendant une nuit à 120°C puis calcinés à 540°C pendant 2,0 h sous un débit d'air contenant 60 g d'eau / kg d'air sec.

On obtient ainsi des grains trilobés de 1,2 mm de diamètre, ayant une surface spécifique de 180 m$^2$/g, un volume poreux total de 0,76 mL/g, une distribution de mésopores centrée sur 11 nm (diamètre des pores à Vméso/2). Cette alumine contient en outre 0,22 mL/g de volume poreux dans les pores de diamètre supérieur à 50 nm (volume macroporeux).

Ainsi, nous obtenons le catalyseur C3 préparé par comalaxage de la solution aqueuse n°2, dont la préparation est décrite avec l'exemple 2, avec le gâteau de boehmite issu de l'exemple 6.

Exemple 10 : Préparation d'un catalyseur C4 par comalaxage de boehmite et d'une solution aqueuse obtenue par dissolution d'heptamolybdate d'ammonium et de nitrate de nickel (non conforme à l'invention)

c) Le gâteau de boehmite préparé selon l'exemple 6, subit un vide poussé, à une température de 20°C, puis le vide est augmenté pendant une durée de 6 heures, avec une PAF passant de 71% à 62% poids.

e) Mélange de 90 g de gâteau de boehmite et de 18,3 g la solution aqueuse issue de l'exemple 3 (masses ajustées de manière à obtenir 9% de MoO$_3$ sur le catalyseur final) pendant un ajout de 2 min, puis l'ensemble est malaxé pendant 2 minutes (dans un malaxeur à bras en Z). La PAF de la pâte est à ce stade de 65% poids ;

f) Mise en forme de la pâte obtenue dans une extrudeuse piston à travers une filière ayant des orifices trilobés de diamètre circonscrit égal à 1,5 mm ;

g) Séchage pendant une nuit à 120°C ;

h) Calcination à 540°C pendant deux heures sous un débit d'air contenant 60 g d'eau / kg d'air sec.

On obtient ainsi des grains trilobés de 1,2 mm de diamètre, ayant une surface spécifique de 180 m$^2$/g, un volume poreux total de 0,78 mL/g, une distribution de mésopores centrée sur 11 nm (dp à Vméso/2). Cette alumine contient en outre 0,21 mL/g de volume poreux dans les pores de diamètre supérieur à 50 nm (volume macroporeux).

Ainsi, nous obtenons le catalyseur C4 préparé par comalaxage de la solution aqueuse n°3, dont la préparation est décrite avec l'exemple 3, avec le gâteau de boehmite issu de l'exemple 6.

Exemple 11 : Préparation d'un catalyseur C5 par comalaxage de boehmite et d'une solution aqueuse à pH inférieur à 3,5 (non conforme à l'invention)

- Le gâteau de boehmite préparé selon l'exemple 6, subit un vide poussé, à une température de 20°C, puis le vide est augmenté pendant une durée de 6 heures, avec une PAF passant de 71% à 62% poids.
- Mélange de 90 g de gâteau de boehmite et de 15,7 g la solution aqueuse issue de l'exemple 4 (masses ajustées de manière à obtenir 9% de MoO$_3$ sur le catalyseur final) pendant un ajout de 2 min, puis l'ensemble est malaxé pendant 2 minutes (dans un malaxeur à bras en Z). La PAF de la pâte obtenue est à ce stade de 63% poids ;
- Mise en forme de la pâte obtenue dans une extrudeuse piston à travers une filière ayant des orifices trilobés de diamètre circonscrit égal à 1,5 mm ;
- A l'issue de ce malaxage, la pâte obtenue est passée à travers une filière ayant des orifices trilobés de diamètre circonscrit égal à 1,5 mm sur une extrudeuse piston ;
- Séchage d'une nuit à 120°C ;
- Calcination à 540°C pendant deux heures sous un débit d'air humide contenant 60 g d'eau / kg d'air sec.

On obtient ainsi des grains trilobés de 1,2 mm de diamètre, ayant une surface spécifique de 180 m$^2$/g, un volume poreux total de 0,40 mL/g, une distribution de mésopores centrée sur 7 nm (dp à Vméso/2). Cette alumine contient en outre 0,12 mL/g de volume poreux dans les pores de diamètre supérieur à 50 nm (volume macroporeux). La forte perte du volume poreux s'explique par des effets de dissolution / reprécipitation de la boehmite en contact de la solution d'imprégnation fortement acide.

Ainsi, nous obtenons le catalyseur C5 préparé par comalaxage de la solution aqueuse n°4, dont la préparation est décrite avec l'exemple 4, avec le gâteau de boehmite issu de l'exemple 6.

Exemple 12 : Préparation d'un catalyseur C6 par comalaxage de boehmite et d'une solution aqueuse à pH supérieur à 3,5 (conforme à l'invention)

c) Obtention d'un gâteau de boehmite tel que décrit dans l'exemple 6, puis séchage du gâteau sous vide poussé, à une température de 20°C, pendant 6 heures, et obtention d'un gâteau avec PAF passant de 71% à 62% poids.
d) Préparation d'une solution aqueuse tel que décrite à l'exemple 5 ;
e) Mise en contact de 90,0g de gâteau obtenu à l'issue de l'étape c) avec 15,7g de la solution obtenue à l'issue de l'étape d) (masses ajustées de manière à obtenir 9% de $MoO_3$ sur le catalyseur final) pendant 2 minutes, et comalaxage pendant 2 minutes dans un malaxeur à bras en Z pour obtenir une pâte. La PAF de la pâte est à ce stade de 63% poids;
f) Mise en forme de la pâte obtenue dans une extrudeuse piston, à travers une filière ayant des orifices trilobés de diamètre circonscrit égal à 1,5 mm pour former des grains ;
g) Séchage des grains pendant une nuit à 120°C puis calcinés à 540°C pendant 2,0 h sous un débit d'air contenant 60 g d'eau / kg d'air sec.

On obtient ainsi des grains trilobés de 1,2 mm de diamètre, ayant une surface spécifique de 180 m²/g, un volume poreux total de 0,80 mL/g, une distribution de mésopores centrée sur 11 nm (dp à Vméso/2). Cette alumine contient en outre 0,21 mL/g de volume poreux dans les pores de diamètre supérieur à 50 nm (volume macroporeux).

Ainsi, nous obtenons le catalyseur C6 préparé par comalaxage de la solution aqueuse n°5, dont la préparation est décrite avec l'exemple 5, avec le gâteau de boehmite issu de l'exemple 6.

Exemple 13 : Évaluation des catalyseurs C1, C2, C3, C4, C5 et C6 en hydrotraitement et hydroconversion de résidus.

Les catalyseurs ont été soumis à un test catalytique en réacteur batch fermé et parfaitement agité, sur une charge hydrocarbonée lourde de type RSV (Tableau 1).

**Tableau 1 : Principales caractéristiques de la charge RSV mise en œuvre**

| Charge | RSV |
|---|---|
| Densité (g/mL) | 1,024 |
| Soufre (% poids) | 4,9 |
| Azote (ppm) | 4495 |
| Viscosité à 100°C (cSt) | 3306 |
| Carbone Conradson (% poids) | 21,6 |
| Asphaltènes $C_7$ (% poids) | 12,6 |
| Ni (ppm) | 51 |
| V (ppm) | 165,9 |
| DS : PI °C | 306 |
| DS: 05 % vol. °C | 476 |
| DS: 10 % vol. °C | 504 |
| DS: 20 % vol. °C | 537 |
| DS : 30 % vol. °C | 568 |
| DS : 40 % vol. °C | 600 |

(suite)

| Charge | RSV |
|---|---|
| DS : 60 % vol. °C | 673 |

DS = distillation simulée
PI = Point d'ébullition Initial

Pour ce faire, après une étape de sulfuration ex-situ par circulation d'un mélange gazeux $H_2S/H_2$ durant 2 heures à 350°C, 20 mL de catalyseur est chargé à l'abri de l'air dans le réacteur discontinu puis est recouvert de 120 mL de charge. Les conditions opératoires sont les suivantes :

- température: 400°C
- pression totale:14.5 MPa
- temps : 3h
- vitesse d'agitation : 900 tr/min

A la fin du test, un bilan matière est réalisé en pesant l'ensemble des phase solides, liquide et gaz formées. Le taux d'HDX est défini de la façon suivante :

$$HDX = \frac{m_{feed}[x]_{feed} - m_{product}[x]_{product}}{m_{feed}[x]_{feed}} \times 100$$    Equation 1

où X correspond aux teneurs en AsC7, S, V, CCR ou 540°C+ dans les effluent liquides et m correspond à la masse de charge ($m_{feed}$) ou la masse d'effluent liquide récupéré en fin de test ($m_{product}$).

Les performances des catalyseurs sont résumées dans le Tableau 2. Les catalyseurs C2, C3 et C6, conformes à l'invention, présentent des performances $HDAsC_7$, HDS, HDV et HDCCR :

- supérieures aux performances du catalyseur C4 préparé par comalaxage de boehmite et d'une solution aqueuse sans hétéropolyanions, mais contenant des ions molybdates et nitrates,
- supérieures aux performances du catalyseur C5 préparé par comalaxage de boehmite et d'une solution aqueuse trop acide,
- équivalentes aux performances du catalyseur C1 préparé selon un procédé multi-étapes peu intégré.

**Tableau 2 : Performances des catalyseurs**

| Catalyseurs | $HDAsC_7$ (% poids) | HDS (% poids) | HDV (% poids) | HDCCR(% poids) | HD540°C+ (% poids) |
|---|---|---|---|---|---|
| C1 (comparatif) | 59+/- 3 | 55+/- 2 | 81+/- 4 | 45 +/- 2 | 50 +/- 2 |
| C2 (invention) | 56+/- 3 | 53+/- 2 | 78+/- 4 | 44 +/- 2 | 48 +/- 2 |
| C3 (invention) | 59+/- 3 | 53+/- 2 | 82+/- 4 | 43 +/- 2 | 49 +/- 2 |
| C4 (comparatif) | 47+/- 3 | 39+/- 2 | 67+/- 4 | 37 +/- 2 | 50 +/- 2 |
| C5 (comparatif) | 25+/- 3 | 40+/- 2 | 39+/- 4 | 39 +/- 2 | 51 +/- 2 |
| C6 (invention) | 57+/- 3 | 55+/- 2 | 77+/- 4 | 45 +/- 2 | 48 +/- 2 |

**Revendications**

1.    Procédé de préparation d'un catalyseur comprenant une phase active comprenant du molybdène et du nickel et/ou du cobalt, et une matrice oxyde composée majoritairement d'alumine, ledit catalyseur comprenant un volume poreux total d'au moins 0,6 mL/g, un volume macroporeux compris entre 10,0 et 40,0 % du volume poreux total, un volume mésoporeux d'au moins 0,5 mL/g et un diamètre mésoporeux moyen supérieur à 5,0 nm, lesdits volume poreux total, volume macroporeux et volume mésoporeux étant mesurés la méthode de l'intrusion au mercure selon la norme ASTM D4284-83, ledit procédé comprenant les étapes suivantes :

a) Une étape de préparation d'une solution aqueuse de précurseurs d'aluminium comprenant un premier précurseur acide d'aluminium, choisi parmi le sulfate d'aluminium, le chlorure d'aluminium, le nitrate d'aluminium et leurs mélanges, et un premier précurseur basique d'aluminium, choisi parmi l'aluminate de sodium, l'aluminate de potassium, l'ammoniaque, l'hydroxyde de sodium, l'hydroxyde de potassium et leurs mélanges;

b) Une étape de mise en contact de la solution obtenue à l'issue de l'étape a) avec un deuxième précurseur basique, choisi parmi l'aluminate de sodium, l'aluminate de potassium, l'ammoniaque, l'hydroxyde de sodium, l'hydroxyde de potassium et leurs mélanges, et avec un deuxième précurseur acide choisi parmi le sulfate d'aluminium, le chlorure d'aluminium, le nitrate d'aluminium, l'acide sulfurique, l'acide chlorhydrique, l'acide nitrique et leurs mélanges, pour obtenir une suspension, avec au moins un des deuxièmes précurseurs basique ou acide comprenant de l'aluminium, le débit relatif des deuxièmes précurseurs acide et basique étant choisi de manière à obtenir un pH du milieu réactionnel compris entre 7,0 et 10,0 et le débit du ou des deuxièmes précurseurs acide et basique contenant de l'aluminium étant réglé de manière à obtenir une concentration en équivalent alumine dans la suspension comprise entre 10,0 et 80,0 g/L, à une température comprise entre 20,0 et 90,0°C et pendant une durée comprise entre 1 et 75 minutes;

c) Filtration et lavage de la suspension obtenue à l'étape b) pour obtenir un gâteau de boehmite

d) Préparation d'une solution aqueuse limpide à un pH compris entre 3,5 et 8,0, comprenant un sel d'hétéropolyanion de type Keggin et/ou Keggin lacunaire et/ou Keggin lacunaire substitué et/ou Anderson et/ou Strandberg et leurs mélanges, ledit sel présentant dans sa structure du molybdène et du cobalt et/ou du nickel;

e) Comalaxage du gâteau de boehmite obtenu à l'issue de l'étape c) avec la solution aqueuse limpide obtenue à l'issue de l'étape d) pour former une pâte;

f) Mise en forme de la pâte obtenue à l'issue de l'étape e) pour former des grains de précurseur de catalyseur ;

g) Séchage des grains obtenus à l'issue de l'étape f), à une température inférieure à 250,0°C pour obtenir des grains séchés de précurseur du catalyseur;

h) Calcination des grains séchés obtenus à l'issue de l'étape g), à une température comprise entre 250,0 et 1000,0°C.

2. Procédé selon la revendication 1, dans lequel l'étape a) comprend deux opérations :

i) la mise en solution du premier précurseur acide d'aluminium, dans de l'eau et ;

ii) la mise en contact de ladite solution avec le premier précurseur basique d'aluminium, afin d'ajuster le pH de ladite solution.

3. Procédé selon la revendication 1, dans lequel l'étape a) comprend deux opérations :

- i') la mise en contact du premier précurseur acide d'aluminium et du premier précurseur basique d'aluminium dans de l'eau, et ;

- ii') le chauffage de la suspension obtenue à l'issue de l'étape i').

4. Procédé selon l'une quelconque des revendications précédentes, dans lequel le sel d'hétéropolyanion est choisi dans la liste constituée par :

• les hétéropolyanions de type Keggin, Keggin lacunaire, ou Keggin lacunaire substitué, selon la formule (I) :

$$C_pX_{x/2}A_gMo_mW_nX'_zO_yH_h \qquad (I)$$

Où,

- C est le cation $H^+$ et/ou un cation ammonium quaternaire substitué ou non substitué,
- p est un nombre entier compris entre 0 et 6, préférablement p est un nombre entier compris entre 0 et 2,
- X est le cation $Ni^{2+}$ ou le cation $Co^{2+}$,
- x est un nombre entier compris entre 0 et 11, préférablement x est un nombre entier compris entre 3 et 8,
- p+x est un nombre entier compris entre 3 et 11, préférablement p+x est un nombre entier compris entre 3 et 8,
- A est le phosphore ou le silicium ou le bore, préférablement A est le phosphore ou le silicium,
- g est 0 ou 1, préférablement g est 1,
- Mo est le molybdène,

- W est le tungstène,
- m est un nombre entier compris entre 1 et 12, préférablement m est un nombre entier compris entre 9 et 12,
- n est un nombre entier compris entre 0 et 11, préférablement n est un nombre entier compris entre 0 et 3,
- m+n = 9 ou 11 ou 12, préférablement m+n = 11 ou 12,
- X' est un élément du groupe VIII du tableau périodique, préférablement X' est le nickel ou le cobalt,
- z est 0 ou 1,
- x+z est un nombre entier supérieur ou égal à 1,
- O est l'oxygène,
- y est un nombre entier égal à 34 ou 39 ou 40, préférablement y est un nombre entier égal à 39 ou 40,
- H est l'hydrogène,
- h est un nombre entier compris entre 0 et 3, préférablement h est un nombre entier compris entre 0 et 2, et
- la structure $A_g Mo_m W_n X'_z O_y H_h$ est l'hétéropolyanion chargé négativement, sa charge étant égale à -(p+x) ;

• les hétéropolyanions de type Anderson, de formule (II) :

$$A_a Mo_m W_n O_y H_h M_{x/2} \qquad (II)$$

Où,

- A est le nickel ou le cobalt,
- a est 1 ou 2,
- Mo est le molybdène,
- W est le tungstène,
- m est un nombre entier compris entre 1 et 10, préférablement m est un nombre entier compris entre 6 et 10,
- n est un nombre entier compris entre 0 et 9, préférablement n est un nombre entier compris entre 0 et 4,
- m+n est 6 ou 10,
- O est l'oxygène,
- y est 24 ou 38,
- H est l'hydrogène,
- h est 4 ou 6,
- la structure $A_a Mo_m W_n O_y H_h$ est l'hétéropolyanion chargé négativement, sa charge étant égale à -x,
- M est un cation d'un des éléments du groupe VIII du tableau périodique, préférablement M est le cation $Ni^{2+}$ ou le cation $Co^{2+}$ et
- x est un nombre entier compris entre 3 et 8, préférablement x est un nombre entier compris entre 4 et 8 ;

• les hétéropolyanions de type Strandberg, de formule (III) :

$$M_{(6-h)/2} H_h P_2 Mo_m W_n O_{23} \qquad (III)$$

Où,

- M est le cation $Ni^{2+}$ ou le cation $Co^{2+}$,
- H est l'hydrogène,
- h est un nombre entier compris entre 0 et 2,
- P est le phosphore,
- Mo est le molybdène,
- W est le tungstène,
- m est un nombre entier compris entre 1 et 5, préférablement m est un nombre entier compris entre 3 et 5,
- n est un nombre entier compris entre 0 et 4, préférablement n est un nombre entier compris entre 0 et 2,
- m + n = 5,
- O est l'oxygène,
- la structure $H_h P_2 Mo_m W_n O_{23}$ est l'hétéropolyanion chargé négativement, sa charge étant égale à h-6.

5. Procédé selon la revendication 4, dans lequel le sel d'hétéropolyanion est choisi parmi les hétéropolyanions de type Anderson, de formule (II).

6. Procédé selon la revendication 4, dans lequel le sel d'hétéropolyanion, utilisé seul ou en mélange, est choisi parmi les hétéropolyanions de formule (I) suivants : $Ni_{3/2} PMo_{12} O_{40}$, $Ni_2 SiMo_{12} O_{40}$, $Ni_3 Mo_{12} O_{40} H_2$, $Ni_4 SiMo_{11} O_{39}$, $Ni_{7/2} P$-

$Mo_{11}O_{39}$, $Ni_3SiMo_{11}NiO_{40}H_2$, $Ni_3PMo_{11}NiO_{40}H$, $Co_{3/2}PMo_{12}O_{40}$, $Co_2SiMo_{12}O_{40}$, $Co_3Mo_{12}O_{40}H_2$, $Co_4SiMo_{11}O_{39}$, $Co_{7/2}PMo_{11}O_{39}$, $Co_3SiMo_{11}CoO_{40}H_2$, $Co_3SiMo_{11}NiO_{40}H_2$, $Ni_3SiMo_{11}CoO_{40}H_2$, $Co_3PMo_{11}CoO_{40}H$, $Co_3PMo_{11}NiO_{40}H$, $Ni_3PMo_{11}CoO_{40}H$.

7. Procédé selon la revendication 4, dans lequel le sel d'hétéropolyanion, utilisé seul ou en mélange, est choisi parmi les hétéropolyanions de formule (II) suivants : $CoMo_6O_{24}H_6Co_{3/2}$, $CoMo_6O_{24}H_6Ni_{3/2}$, $CoMo_6O_{24}H_6CO_2$, $CoMo_6O_{24}H_6Ni_2$, $NiMo_6O_{24}H_6Ni_2$, $NiMo_6O_{24}H_6Co_2$, $Co_2Mo_{10}O_{38}H_4CO_3$, $Co_2Mo_{10}O_{38}H_4Ni_3$, $Ni_2MO_{10}O_{38}H_4Co_4$, $Ni_2Mo_{10}O_{38}H_4Ni_4$.

8. Procédé selon la revendication 4, dans lequel le sel d'hétéropolyanion, utilisé seul ou en mélange, est choisi parmi les hétéropolyanions de formule (III) suivants : $Co_2H_2P_2Mo_5O_{23}$, $Co_{5/2}HP_2Mo_5O_{23}$, $Co_3P_2Mo_5O_{23}$, $Ni_2H_2P_2Mo_5O_{23}$, $Ni_{5/2}HP_2Mo_5O_{23}$, $Ni_3P_2Mo_5O_{23}$.

9. Procédé selon l'une quelconque des revendications précédentes, dans lequel le catalyseur présente un volume microporeux inférieur à 0,05 mL/g.

10. Procédé selon l'une quelconque des revendications précédentes, dans lequel le catalyseur a une teneur en molybdène comprise entre 2,0 et 18,0% en poids de trioxyde de molybdène par rapport à la masse totale du catalyseur.

11. Procédé selon l'une quelconque des revendications précédentes, dans lequel le catalyseur a une teneur en métal cobalt et/ou nickel comprise entre 0,25 et 5,0% en poids de l'oxyde de cobalt et/ de nickel, par rapport à la masse totale du catalyseur.

12. Procédé selon l'une quelconque des revendications précédentes, dans lequel le catalyseur comprend en outre du tungstène, à une teneur comprise entre 2,0 et 18,0% en poids de trioxyde de tungstène par rapport à la masse totale du catalyseur.

13. Procédé selon l'une quelconque des revendications précédentes, dans lequel le catalyseur comprend en outre du silicium ou du bore ou du phosphore, a une teneur comprise entre 0,1 à 8,0% en poids d'oxyde de silicium ou d'oxyde de phosphore ou d'oxyde de bore, par rapport à la masse totale du catalyseur.

14. Procédé selon l'une quelconque des revendications précédentes, dans lequel la solution comprenant le sel d'hétéropolyanion est préparée selon les étapes suivantes :

$\alpha$/ Dissolution d'un précurseur de molybdène, et optionnellement d'un précurseur de tungstène, avec un composé oxoacide et/ou un oxydant et/ou une base, dans l'eau ;
$\beta$/ Ajout d'un précurseur de nickel et/ou de cobalt à la solution obtenue à l'issue de l'étape $\alpha$/ ;
$\gamma$/ Optionnellement élimination du solide formé à l'issue de l'étape $\beta$/ afin d'obtenir une solution aqueuse limpide comprenant un sel d'hétéropolyanion ;
$\delta$/ Optionnellement le pH de la solution aqueuse est ajusté, par ajout d'une base organique, à une valeur comprise entre 3,5 et 8,0.

15. Procédé selon la revendication 14, dans lequel l'étape $\delta$/ est réalisée dans le cas où le pH de la solution issue de l'étape $\beta$/ ou $\gamma$/, est inférieur à 3,5.

16. Utilisation d'un catalyseur préparé selon l'une quelconque des revendications 1 à 15 dans un procédé d'hydrotraitement et/ou d'hydroconversion d'une charge hydrocarbonée lourde contenant au moins 50,0% en poids d'hydrocarbures ayant une température d'ébullition supérieure à 300°C par rapport au poids de la charge hydrocarbonée lourde et au moins 1,0% en poids d'hydrocarbures ayant une température d'ébullition supérieure à 540°C par rapport au poids de la charge hydrocarbonée lourde.

**Patentansprüche**

1. Verfahren zur Herstellung eines Katalysators, der ein aktive Phase, welche Molybdän und Nickel und/oder Kobalt umfasst, und eine Oxidmatrix umfasst, welche sich überwiegend aus Aluminiumoxid zusammensetzt, wobei der Katalysator ein Gesamtporenvolumen von mindestens 0,6 mL/g, ein Makroporenvolumen im Bereich von 10,0 bis 40,0 % des Gesamtporenvolumens, ein Mesoporenvolumen von mindestens 0,5 mL/g und einen mittleren Mesoporendurchmesser von mehr als 5,0 nm umfasst, wobei das Gesamtporenvolumen, das Makroporenvolumen und das Mesoporenvolumen mittels Quecksilberporosimetrie gemäß der Norm ASTM D4284-83 gemessen werden, wobei das Verfahren die folgenden Schritte umfasst:

a) einen Schritt des Herstellens einer wässrigen Lösung von Aluminium-Vorläufersubstanzen, die eine erste saure Aluminium-Vorläufersubstanz, welche aus Aluminiumsulfat, Aluminiumchlorid, Aluminiumnitrat und deren Mischungen ausgewählt ist, und eine erste basische Aluminium-Vorläufersubstanz umfasst, welche aus Natriumaluminat, Kaliumaluminat, wässriger Ammoniaklösung, Natriumhydroxid, Kaliumhydroxid und deren Mischungen ausgewählt ist;

b) einen Schritt des Inkontaktbringens der Lösung, welche nach Abschluss des Schrittes a) erhalten wurde, mit einer zweiten basischen Vorläufersubstanz, die aus Natriumaluminat, Kaliumaluminat, wässriger Ammoniaklösung, Natriumhydroxid, Kaliumhydroxid und deren Mischungen ausgewählt ist, und mit einer zweiten sauren Vorläufersubstanz, die aus Aluminiumsulfat, Aluminiumchlorid, Aluminiumnitrat, Schwefelsäure, Salzsäure, Salpetersäure und deren Mischungen ausgewählt ist, um eine Suspension mit mindestens einer der zweiten basischen oder sauren Vorläufersubstanzen zu erhalten, welche Aluminium umfassen, wobei die relative Zustromrate der zweiten sauren beziehungsweise basischen Vorläufersubstanzen derart gewählt wird, dass ein pH-Wert des Reaktionsmilieus erzielt wird, der im Bereich von 7,0 bis 10,0 liegt, und die Zustromrate der zweiten sauren beziehungsweise basischen Vorläufersubstanz(en), welche Aluminium enthält/enthalten, derart eingestellt wird, das in der Suspension eine Konzentration an Aluminiumoxidäquivalenten erzielt wird, die im Bereich von 10,0 bis 80,0 g/L liegt, bei einer Temperatur im Bereich von 20,0 bis 90,0 °C und über einen Zeitraum im Bereich von 1 bis 75 Minuten;

c) Filtrieren und Waschen der Suspension, welche in Schritt b) erhalten wurde, um einen Böhmit-Kuchen zu erhalten

d) Herstellen einer klaren wässrigen Lösung bei einem pH-Wert im Bereich von 3,5 bis 8,0, die ein Heteropolyanionen-Salz mit Keggin-Struktur und/oder mit lückenhafter Keggin-Struktur und/oder mit substituierter lückenhafter Keggin-Struktur und/oder mit Anderson-Struktur und/oder mit Strandberg-Struktur oder deren Mischungen umfasst, wobei das Salz in seiner Struktur Molybdän und Kobalt und/oder Nickel aufweist;

e) Gemeinsames Durchmischen des Böhmit-Kuchens, welcher nach Abschluss des Schrittes c) erhalten wurde, mit der klaren wässrigen Lösung, welche nach Abschluss des Schrittes d) erhalten wurde, um eine Paste zu bilden;

f) Formen der Paste, welche nach Abschluss des Schrittes e) erhalten wurde, um Katalysatorvorstufenkörner zu bilden;

g) Trocknen der Körner, welche nach Abschluss des Schrittes f) erhalten wurden, bei einer Temperatur von weniger als 250,0 °C, um getrocknete Katalysatorvorstufenkörner zu erhalten;

h) Brennen der getrockneten Körner, welche nach Abschluss des Schrittes g) erhalten wurden, bei einer Temperatur im Bereich von 250,0 bis 1000,0 °C.

**2.** Verfahren nach Anspruch 1, wobei der Schritt a) zwei Vorgänge umfasst:

i) Inlösungbringen der ersten sauren Aluminium-Vorläufersubstanz in Wasser; und

ii) Inkontaktbringen der Lösung mit der ersten basischen Aluminium-Vorläufersubstanz, um den pH-Wert der Lösung einzustellen.

**3.** Verfahren nach Anspruch 1, wobei der Schritt a) zwei Vorgänge umfasst:

- i') Inkontaktbringen der ersten sauren Aluminium-Vorläufersubstanz und der ersten basischen Aluminium-Vorläufersubstanz in Wasser, und,

- ii') Erwärmen der Suspension, welche nach Abschluss des Schrittes i') erhalten wurde.

**4.** Verfahren nach einem beliebigen der vorhergehenden Ansprüche, wobei das Heteropolyanionen-Salz aus der Liste ausgewählt ist, die aus den folgenden besteht:

• den Heteropolyanionen mit Keggin-Struktur und/oder lückenhafter Keggin-Struktur und/oder substituierter lückenhafter Keggin-Struktur, nach der Formel (I):

$$C_p X_{x/2} A_g Mo_m W_n X'_z O_y H_h \qquad (I)$$

wobei

- C für das Kation $H^+$ und/oder ein substituiertes oder unsubstituiertes quartäres Ammoniumkation steht,
- p für eine ganze Zahl im Bereich von 0 bis 6 steht, wobei p vorzugsweise für eine ganze Zahl im Bereich von 0 bis 2 steht,
- X für das Kation $Ni^{2+}$ oder das Kation $Co^{2+}$ steht,
- x für eine ganze Zahl im Bereich von 0 bis 11 steht, wobei x vorzugsweise für eine ganze Zahl im Bereich von 3 bis 8 steht,
- p+x für eine ganze Zahl im Bereich von 3 bis 11 steht, wobei p+x vorzugsweise für eine ganze Zahl im Bereich von 3 bis 8 steht,
- A für Phosphor oder Silicium oder Bor steht, wobei A vorzugsweise für Phosphor oder Silicium steht,
- g für 0 oder 1 steht, wobei g vorzugsweise für 1 steht,
- Mo für Molybdän steht,
- W für Wolfram steht,
- m für eine ganze Zahl im Bereich von 1 bis 12 steht, wobei m vorzugsweise für eine ganze Zahl im Bereich von 9 bis 12 steht,
- n für eine ganze Zahl im Bereich von 0 bis 11 steht, wobei n vorzugsweise für eine ganze Zahl im Bereich von 0 bis 3 steht,
- m+n = 9 oder 11 oder 12 ist, wobei m+n vorzugsweise = 11 oder 12 ist,
- X' für ein Element der Gruppe VIII des Periodensystems steht, wobei X' vorzugsweise für Nickel oder Kobalt steht,
- z gleich 0 oder 1 ist,
- x+z für eine ganze Zahl steht, die größer oder gleich 1 ist,
- O für Sauerstoff steht,
- y für eine ganze Zahl steht, die gleich 34 oder 39 oder 40 ist, wobei y vorzugsweise für eine ganze Zahl steht, die gleich 39 oder 40 ist,
- H für Wasserstoff steht,
- h für eine ganze Zahl im Bereich von 0 bis 3 steht, wobei h vorzugsweise für eine ganze Zahl im Bereich von 0 bis 2 steht,
- die Struktur $A_g Mo_m W_n X'_z O_y H_h$ für das negativ geladene Heteropolyanion steht, wobei dessen Ladung gleich -(p+x) ist;

• den Heteropolyanionen mit Anderson-Struktur, nach der Formel (II) :

$$A_a Mo_m W_n O_y H_h M_{x/2} \qquad (II)$$

wobei

- A für Nickel oder Kobalt steht,
- a gleich 1 oder 2 ist,
- Mo für Molybdän steht,
- W für Wolfram steht,
- m für eine ganze Zahl im Bereich von 1 bis 10 steht, wobei m vorzugsweise für eine ganze Zahl im Bereich von 6 bis 10 steht,
- n für eine ganze Zahl im Bereich von 0 bis 9 steht, wobei n vorzugsweise für eine ganze Zahl im Bereich von 0 bis 4 steht,
- m+n gleich 6 oder 10 ist,
- O für Sauerstoff steht,
- y gleich 24 oder 38 ist,
- H für Wasserstoff steht,
- h gleich 4 oder 6 ist,
- die Struktur $A_a Mo_m W_n O_y H_h$ für das negativ geladene Heteropolyanion steht, wobei dessen Ladung gleich -x ist,
- M für ein Kation eines der Elemente der Gruppe VIII des Peridoensystems steht, wobei M vorzugsweise für das Kation $Ni^{2+}$ oder das Kation $Co^{2+}$ steht, und
- x für eine ganze Zahl im Bereich von 3 bis 8 steht, wobei x vorzugsweise für eine ganze Zahl im Bereich von 4 bis 8 steht,

• den Heteropolyanionen mit Strandberg-Struktur, nach der Formel (III):

$$M_{(6-h)/2}H_hP_2Mo_mW_nO_{23} \qquad (III)$$

wobei

- M für das Kation $Ni^{2+}$ oder das Kation $Co^{2+}$ steht,
- H für Wasserstoff steht,
- h für eine ganze Zahl im Bereich von 0 bis 2 steht,
- P für Phosphor steht,
- Mo für Molybdän steht,
- W für Wolfram steht,
- m für eine ganze Zahl im Bereich von 1 bis 5 steht, wobei m vorzugsweise für eine ganze Zahl im Bereich von 3 bis 5 steht,
- n für eine ganze Zahl im Bereich von 0 bis 4 steht, wobei n vorzugsweise für eine ganze Zahl im Bereich von 0 bis 2 steht,
- m + n = 5 ist,
- O für Sauerstoff steht,
- die Struktur $H_hP_2Mo_mW_nO_{23}$ für das negativ geladene Heteropolyanion steht, wobei dessen Ladung gleich h-6 ist.

5. Verfahren nach Anspruch 4, wobei das Heterpolyanionen-Salz aus den Heteropolyanionen mit Anderson-Struktur, nach der Formel (II), ausgewählt ist.

6. Verfahren nach Anspruch 4, wobei das Heteropolyanionen-Salz, welches allein oder in Mischung verwendet wird, aus den folgenden Heteropolyanionen nach der Formel (I) ausgewählt ist: $Ni_{3/2}PMo_{12}O_{40}$, $Ni_2SiMo_{12}O_{40}$, $Ni_3Mo_{12}O_{40}H_2$, $Ni_4SiMo_{11}O_{39}$, $Ni_{7/2}PMo_{11}O_{39}$, $Ni_3SiMo_{11}NiO_{40}H_2$, $Ni_3PMo_{11}NiO_{40}H$, $Co_{3/2}PMo_{12}O_{40}$, $Co_2SiMo_{12}O_{40}$, $Co_3Mo_{12}O_{40}H_2$, $Co_4SiMo_{11}O_{39}$, $C_{07/2}PMo_{11}O_{39}$, $Co_3SiMo_{11}CoO_{40}H_2$, $Co_3SiMo_{11}NiO_{40}H_2$, $Ni_3SiMo_{11}CoO_{40}H_2$, $Co_3PMo_{11}CoO_{40}H$, $Co_3PMo_{11}NiO_{40}H$, $Ni_3PMo_{11}CoO_{40}H$.

7. Verfahren nach Anspruch 4, wobei das Heteropolyanionen-Salz, welches allein oder in Mischung verwendet wird, aus den folgenden Heteropolyanionen nach der Formel (II) ausgewählt ist: $CoMoeO_{24}HeCo_{3/2}$, $CoMo_6O_{24}H_6Ni_{3/2}$, $CoMo_6O_{24}H_6Co_2$, $COMo_6O_{24}H_6Ni_2$, $NiMo_6O_{24}H_6Ni_2$, $NiMo_6O_{24}H_6Co_2$, $Co_2Mo_{10}O_{38}H_4Co_3$, $Co_2Mo_{10}O_{38}H_4Ni_3$, $Ni_2Mo_{10}O_{38}H_4Co_4$, $Ni_2Mo_{10}O_{38}H_4Ni_4$.

8. Verfahren nach Anspruch 4, wobei das Heteropolyanionen-Salz, welches allein oder in Mischung verwendet wird, aus den folgenden Heteropolyanionen nach der Formel (III) ausgewählt ist: $Co_2H_2P_2Mo_5O_{23}$, $CO_{5/2}HP_2Mo_5O_{23}$, $Co_3P_2Mo_5O_{23}$, $Ni_2H_2P_2Mo_5O_{23}$, $Ni_{5/2}HP_2Mo_5O_{23}$, $Ni_3P_2Mo_5O_{23}$.

9. Verfahren nach einem beliebigen der vorhergehenden Ansprüche, wobei der Katalysator ein Mikroporenvolumen von weniger als 0,05 mL/g aufweist.

10. Verfahren nach einem beliebigen der vorhergehenden Ansprüche, wobei der Katalysator einen Molybdängehalt im Bereich von 2,0 bis 18,0 Gewichts-% an Molybdäntrioxid aufweist, bezogen auf die Gesamtmasse des Katalysators.

11. Verfahren nach einem beliebigen der vorhergehenden Ansprüche, wobei der Katalysator einen Kobalt- und/oder Nickelmetallgehalt im Bereich von 0,25 bis 5,0 Gewichts-% an Kobalt- und/ Nickeloxid aufweist, bezogen auf die Gesamtmasse des Katalysators.

12. Verfahren nach einem beliebigen der vorhergehenden Ansprüche, wobei der Katalysator darüber hinaus Wolfram umfasst, zu einem Gehalt im Bereich von 2,0 bis 18,0 Gewichts-% an Wolframtrioxid, bezogen auf die Gesamtmasse des Katalysators.

13. Verfahren nach einem beliebigen der vorhergehenden Ansprüche, wobei der Katalysator darüber hinaus Silicium oder Bor oder Phosphor umfasst, zu einem Gehalt im Bereich von 0,1 bis 8,0 Gewichts-% an Siliciumoxid oder Phosphoroxid oder Boroxid, bezogen auf die Gesamtmasse des Katalysators.

14. Verfahren nach einem beliebigen der vorhergehenden Ansprüche, wobei die Lösung, welche das Heteropolyanionen-Salz umfasst, gemäß den folgenden Schritte hergestellt wird:

α/ Auflösen einer Molybdän-Vorläufersubstanz, und möglicherweise einer Wolfram-Vorläufersubstanz, mit einer Oxosäure-Verbindung und/oder einem Oxidationsmittel und/oder einer Base, in Wasser;

β/ Hinzufügen einer Nickel- und/oder Kobalt-Vorläufersubstanz zu der Lösung, welche nach Abschluss des Schrittes α/ erhalten wurde;

γ/ gegebenenfalls Entfernen des Feststoffs, welcher sich nach Abschluss des Schritt β/ gebildet hat, um eine klare wässrige Lösung zu erhalten, die ein Heteroanionen-Salz umfasst;

δ/ gegebenenfalls wird der pH-Wert der wässrigen Lösung durch Hinzufügen einer organischen Base auf einen Wert im Bereich von 3,5 bis 8,0 eingestellt.

15. Verfahren nach Anspruch 14, wobei der Schritt δ/ durchgeführt wird, falls der pH-Wert der Lösung, welche nach Abschluss des Schrittes β/ oder γ/ erhalten wird, niedriger als 3,5 ist.

16. Verwendung eines Katalysators, der nach einem beliebigen der Ansprüche 1 bis 15 hergestellt wurde, in einem Verfahren zur Hydrobehandlung und/oder Hydroumwandlung einer schwerflüchtigen Kohlenwasserstoffcharge, die mindestens 50,0 Gewichts-% an Kohlenwasserstoffen mit einer Siedetemperatur von mehr als 300 °C, bezogen auf das Gewicht der schwerflüchtigen Kohlenwasserstoffcharge, und mindestens 1,0 Gewichts-% an Kohlenwasserstoffen mit einer Siedetemperatur von mehr als 540 °C, bezogen auf das Gewicht der schwerflüchtigen Kohlenwasserstoffcharge, enthält.

## Claims

1. Process for the preparation of a catalyst comprising an active phase comprising molybdenum and nickel and/or cobalt, and an oxide matrix predominantly composed of alumina, said catalyst comprising a total pore volume of at least 0.6 ml/g, a macropore volume of between 10.0% and 40.0% of the total pore volume, a mesopore volume of at least 0.5 ml/g and a mean mesopore diameter of greater than 5.0 nm, said total pore volume, said macropore volume and said mesopore volume being measured using the mercury intrusion method according to Standard ASTM D4284-83, said process comprising the following stages:

a) a stage of preparation of an aqueous solution of aluminium precursors comprising a first acidic aluminium precursor, chosen from aluminium sulfate, aluminium chloride, aluminium nitrate and their mixtures, and a first basic aluminium precursor, chosen from sodium aluminate, potassium aluminate, ammonia, sodium hydroxide, potassium hydroxide and their mixtures;

b) a stage of bringing the solution obtained on conclusion of stage a) into contact with a second basic precursor, chosen from sodium aluminate, potassium aluminate, ammonia, sodium hydroxide, potassium hydroxide and their mixtures, and with a second acidic precursor chosen from aluminium sulfate, aluminium chloride, aluminium nitrate, sulfuric acid, hydrochloric acid, nitric acid and their mixtures, in order to obtain a suspension, with at least one of the second basic or acidic precursors comprising aluminium, the relative flow rate of the second acidic and basic precursors being chosen so as to obtain a pH of the reaction medium of between 7.0 and 10.0 and the flow rate of the second acidic and basic precursor(s) containing aluminium being adjusted so as to obtain a concentration as alumina equivalent in the suspension of between 10.0 and 80.0 g/l, at a temperature of between 20.0 and 90.0°C and over a time of between 1 and 75 minutes;

c) filtration and washing of the suspension obtained in stage b) in order to obtain a boehmite cake;

d) preparation of a clear aqueous solution at a pH of between 3.5 and 8.0, comprising a salt of heteropolyanion of Keggin and/or lacunary Keggin and/or substituted lacunary Keggin and/or Anderson and/or Strandberg type and their mixtures, said salt exhibiting, in its structure, molybdenum and cobalt and/or nickel;

e) cokneading of the boehmite cake obtained on conclusion of stage c) with the clear aqueous solution obtained on conclusion of stage d) in order to form a paste;

f) shaping of the paste obtained on conclusion of stage e) in order to form grains of catalyst precursor;

g) drying of the grains obtained on conclusion of stage f), at a temperature of less than 250.0°C, in order to obtain dried grains of catalyst precursor;

h) calcination of the dried grains obtained on conclusion of stage g), at a temperature of between 250.0 and 1000.0°C.

2. Process according to Claim 1, in which stage a) comprises two operations:

i) dissolving the first acidic aluminium precursor in water, and
ii) bringing said solution into contact with the first basic aluminium precursor, in order to adjust the pH of said solution.

3. Process according to Claim 1, in which stage a) comprises two operations:

- i') bringing the first acidic aluminium precursor and the first basic aluminium precursor into contact in water, and
- ii') heating the suspension obtained on conclusion of stage i').

4. Process according to any one of the preceding claims, in which the heteropolyanion salt is chosen from the list consisting of:

• heteropolyanions of Keggin, lacunary Keggin or substituted lacunary Keggin type, according to the formula (I):

$$C_p X_{x/2} A_g Mo_m W_n X'_z O_y H_h \qquad (I)$$

where:

- C is the $H^+$ cation and/or a substituted or unsubstituted quaternary ammonium cation,
- p is an integer between 0 and 6; preferably, p is an integer between 0 and 2,
- X is the $Ni^{2+}$ cation or the $Co^{2+}$ cation,
- x is an integer between 0 and 11; preferably, x is an integer between 3 and 8,
- p + x is an integer between 3 and 11; preferably, p + x is an integer between 3 and 8,
- A is phosphorus or silicon or boron; preferably, A is phosphorus or silicon,
- g is 0 or 1; preferably, g is 1,
- Mo is molybdenum,
- W is tungsten,
- m is an integer between 1 and 12; preferably, m is an integer between 9 and 12,
- n is an integer between 0 and 11; preferably, n is an integer between 0 and 3,
- m + n = 9 or 11 or 12; preferably, m + n = 11 or 12,
- X' is an element from Group VIII of the Periodic Table; preferably, X' is nickel or cobalt,
- z is 0 or 1,
- x + z is an integer greater than or equal to 1,
- O is oxygen,
- y is an integer equal to 34 or 39 or 40; preferably, y is an integer equal to 39 or 40,
- H is hydrogen,
- h is an integer between 0 and 3; preferably, h is an integer between 0 and 2, and
- the structure $A_g Mo_m W_n X'_z O_y H_h$ is the negatively charged heteropolyanion, its charge being equal to -(p + x);

• heteropolyanions of Anderson type, of formula (II):

$$A_a M_{Om} W_n O_y H_h M_{x/2} \qquad (II)$$

where:

- A is nickel or cobalt,
- a is 1 or 2,
- Mo is molybdenum,
- W is tungsten,
- m is an integer between 1 and 10; preferably, m is an integer between 6 and 10,
- n is an integer between 0 and 9; preferably, n is an integer between 0 and 4,
- m + n is 6 or 10,
- O is oxygen,
- y is 24 or 38,
- H is hydrogen,
- h is 4 or 6,
- the structure $A_a M_{Om} W_n O_y H_h$ is the negatively charged heteropolyanion, its charge being equal to -x,
- M is a cation of one of the elements from Group VIII of the Periodic Table; preferably, M is the $Ni^{2+}$ cation or

the $Co^{2+}$ cation, and
- x is an integer between 3 and 8; preferably, x is an integer between 4 and 8;

• heteropolyanions of Strandberg type, of formula (III):

$$M_{(6-h)/2}H_hP_2MO_mW_nO_{23} \qquad \text{(III)}$$

where:

- M is the $Ni^{2+}$ cation or the $Co^{2+}$ cation,
- H is hydrogen,
- h is an integer between 0 and 2,
- P is phosphorus,
- Mo is molybdenum,
- W is tungsten,
- m is an integer between 1 and 5; preferably, m is an integer between 3 and 5,
- n is an integer between 0 and 4; preferably, n is an integer between 0 and 2,
- m + n = 5,
- O is oxygen,
- the structure $H_hP_2Mo_mW_nO_{23}$ is the negatively charged heteropolyanion, its charge being equal to h-6.

5. Process according to Claim 4, in which the heteropolyanion salt is chosen from heteropolyanions of Anderson type, of formula (II).

6. Process according to Claim 4, in which the heteropolyanion salt, used alone or as a mixture, is chosen from the following heteropolyanions of formula (I): $Ni_{3/2}PMo_{12}O_{40}$, $Ni_2SiMo_{12}O_{40}$, $Ni_3MO_{12}O_{40}H_2$, $Ni_4SiMo_{11}O_{39}$, $Ni_{7/2}P$-$Mo_{11}O_{39}$, $Ni_3SiMo_{11}NiO_{40}H_2$, $Ni_3PMo_{11}NiO_{40}H$, $Co_{3/2}PMo_{12}O_{40}$, $Co_2SiMo_{12}O_{40}$, $Co_3Mo_{12}O_{40}H_2$, $Co_4SiMO_{11}O_{39}$, $Co_{7/2}PMo_{11}O_{39}$, $CO_3SiMo_{11}CoO_{40}H_2$, $Co_3SiMo_{11}NiO_{40}H_2$, $Ni_3SiMo_{11}CoO_{40}H_2$, $Co_3PMo_{11}CoO_{40}H$, $Co_3P$-$Mo_{11}NiO_{40}H$, $Ni_3PMo_{11}CoO_{40}H$.

7. Process according to Claim 4, in which the heteropolyanion salt, used alone or as a mixture, is chosen from the following heteropolyanions of formula (II): $CoMo_eO_{24}H_6Co_{3/2}$, $CoMo_6O_{24}H_6Ni_{3/2}$, $CoMo_6O_{24}H_6CO_2$, $Co$-$Mo_6O_{24}H_6Ni_2$, $NiMo_6O_{24}H_6Ni_2$, $NiMo_6O_{24}H_6Co_2$, $Co_2Mo_{10}O_{38}H_4Co_3$, $Co_2Mo_{10}O_{38}H_4Ni_3$, $Ni_2MO_{10}O_{38}H_4CO_4$, $Ni_2Mo_{10}O_{38}H_4Ni_4$.

8. Process according to Claim 4, in which the heteropolyanion salt, used alone or as a mixture, is chosen from the following heteropolyanions of formula (III): $Co_2H_2P_2Mo_5O_{23}$, $Co_{5/2}HP_2MO_5O_{23}$, $Co_3P_2Mo_5O_{23}$, $Ni_2H_2P_2Mo_5O_{23}$, $Ni_{5/2}HP_2Mo_5O_{23}$, $Ni_3P_2Mo_5O_{23}$.

9. Process according to any one of the preceding claims, in which the catalyst exhibits a micropore volume of less than 0.05 ml/g.

10. Process according to any one of the preceding claims, in which the catalyst has a molybdenum content of between 2.0% and 18.0% by weight of molybdenum trioxide, with respect to the total weight of the catalyst.

11. Process according to any one of the preceding claims, in which the catalyst has a content of cobalt and/or nickel metal of between 0.25% and 5.0% by weight of cobalt and/or nickel oxide, with respect to the total weight of the catalyst.

12. Process according to any one of the preceding claims, in which the catalyst additionally comprises tungsten, at a content of between 2.0% and 18.0% by weight of tungsten trioxide, with respect to the total weight of the catalyst.

13. Process according to any one of the preceding claims, in which the catalyst additionally comprises silicon or boron or phosphorus, at a content of between 0.1% and 8.0% by weight of silicon oxide or of phosphorus oxide or of boron oxide, with respect to the total weight of the catalyst.

14. Process according to any one of the preceding claims, in which the solution comprising the heteropolyanion salt is prepared according to the following stages:

α/ dissolution of a molybdenum precursor, and optionally of a tungsten precursor, with an oxoacid compound and/or an oxidizing agent and/or a base, in water;

β/ addition of a nickel and/or cobalt precursor to the solution obtained on conclusion of stage α/;

γ/ optionally removal of the solid formed on conclusion of stage β/ in order to obtain a clear aqueous solution comprising a heteropolyanion salt;

δ/ optionally, the pH of the aqueous solution is adjusted, by addition of an organic base, to a value of between 3.5 and 8.0.

15. Process according to Claim 14, in which stage δ/ is carried out in the case where the pH of the solution resulting from stage β/ or γ/ is less than 3.5.

16. Use of a catalyst prepared according to any one of Claims 1 to 15 in a process for the hydrotreating and/or hydroconversion of a heavy hydrocarbon feedstock containing at least 50.0% by weight of hydrocarbons having a boiling point of greater than 300°C, with respect to the weight of the heavy hydrocarbon feedstock, and at least 1.0% by weight of hydrocarbons having a boiling point of greater than 540°C, with respect to the weight of the heavy hydrocarbon feedstock.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2681871
- US 4521295 A
- US 4457831 A
- US 4354852 A
- US 5221656 A
- US 5089463 A
- US 7119045 B
- US 4818743 A
- US 6589908 B
- US 6332976 B

- US 20050109674 A
- US 4717706 A
- US 4097413 A
- US 20100243526 A
- US 20150111726 A
- US 20130105364 A
- US 20130284640 A
- FR 3022156
- US 4495060 A

**Littérature non-brevet citée dans la description**

- **ZONG et al.** *Recent Patents on Chemical Engineering*, 2009, vol. 2, 22-36
- **M.S. RANA et al.** *Fuel*, 2007, vol. 86, 1216
- Catalysis By Transition Metal Sulphides. **H. TOULHOAT** ; **P. RAYBAUD et al.** Preparation of Solids Catalysts. IFP Energies Nouvelles Publications, 1999, 137

- **F. ROUQUÉROL** ; **J. ROUQUÉROL** ; **K. SING**. Principles, methodology and applications. Academic Press, 1999
- *The journal of the American Chemical Society*, 1938, vol. 60, 309